(19)

Europäisches Patentamt
European Patent Office
Office européen des brevets

(11) **EP 4 588 967 A1**

(12) **EUROPEAN PATENT APPLICATION**
published in accordance with Art. 153(4) EPC

(43) Date of publication:
**23.07.2025 Bulletin 2025/30**

(21) Application number: **23865240.8**

(22) Date of filing: **25.08.2023**

(51) International Patent Classification (IPC):
*C08J 9/18* (2006.01)   *B29C 44/00* (2006.01)

(52) Cooperative Patent Classification (CPC):
**B29C 44/00; C08J 9/18**

(86) International application number:
**PCT/JP2023/030797**

(87) International publication number:
**WO 2024/057883 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.09.2022 JP 2022146592**

(71) Applicant: **JSP Corporation
Tokyo 100-0005 (JP)**

(72) Inventors:
• **INOUE Tsubasa
Kanuma-shi, Tochigi 322-0014 (JP)**
• **HIRA Akinobu
Kanuma-shi, Tochigi 322-0014 (JP)**

(74) Representative: **KBN IP Patentanwälte
Partnerschaft mbB
Siegfried-Leopold-Straße 27
53225 Bonn (DE)**

(54) **FOAMABLE PARTICLE PRODUCTION METHOD**

(57)    The present invention relates to a method for producing expanded beads using, as a base material resin, a mixture of a polypropylene-based resin A that is a non-recovered material and a polypropylene-based resin B that is a recovered product of a post-consumer material. The present invention provides a method for producing expanded beads, which enables the production of expanded beads in which variation in the expansion ratio and reduction in the closed cell ratio are inhibited, and which is capable of improving the appearance of an expanded beads molded article that is produced by molding the expanded beads. In the method for producing expanded beads, a base material resin, which is a mixture of the polypropylene-based resin A having a melting point of 130°C or higher and 155°C or lower and the polypropylene-based resin B as a recovered product of a post-consumer material is used, in the mixture, the blending rate of the polypropylene-based resin A is 40 wt% or more and 97 wt% or less, and the blending rate of the polypropylene-based resin B is 3 wt% or more and 60 wt% or less (the total of the polypropylene-based resin A and the polypropylene-based resin B is 100 wt%), the melting point difference between the polypropylene-based resin A and the polypropylene-based resin B (the melting point of the polypropylene-based resin B - the melting point of the polypropylene-based resin A) is 10°C or more and 30°C or less, the polypropylene-based resin B has an ash content of 5 wt% or less with respect to 100 wt% of the polypropylene-based resin B, and in a melting peak observed in a DSC curve in heat-flux differential scanning calorimetry of the polypropylene-based resin B, the difference between an extrapolated melting start temperature (Tms) and an extrapolated melting end temperature (Tme) of the melting peak, that is, Tme - Tms is 30°C or more.

FIG. 1

EP 4 588 967 A1

## Description

Technical Field

The present invention relates to a method for producing polypropylene-based resin expanded beads, and more particularly to a method for producing expanded beads using, as polypropylene-based resins, a polypropylene-based resin A that is a non-recovered material and a polypropylene-based resin B that is a recovered product of a post-consumer material.

Background Art

In recent years, in a movement to promote a recycling-oriented society, utilization of recovered materials that are recovered from used products has become a social challenge. Also in the technical field of plastic products, there is an increasing social demand for utilizing, as a recovered material, waste that has been used by end users. In particular, it has been studied to use recovered polypropylene that is obtained by recycling, for example, waste materials of disposable containers made of polypropylene-based resins.

In this context, a technique related to utilization of a used polyolefin-based resin foamed molded article has been proposed. For example, Patent Literature 1 proposes a technique of producing a polyolefin-based resin foamed molded article by, for example, mixing a pulverized product obtained by pulverizing a waste polyolefin-based resin molded article with a virgin polyolefin-based resin to produce pellets, and impregnating the pellets with a blowing agent.

Citation List

Patent Literature

Patent Literature 1: JP 2007-283576 A

Summary of Invention

Technical Problems

Patent Literature 1, however, has the following problems, and there is room for improvement. That is, when expanded beads are produced using a recovered product of a post-consumer material that is produced from a waste polyolefin-based resin molded article and a polyolefin-based resin material that is a non-recovered material, the obtained expanded beads may have variation in the expansion ratio and the closed cell ratio of the expanded beads may be reduced. When an expanded beads molded article is produced by molding the expanded beads thus obtained, an appearance defect may be observed.

The present invention has been made in view of the above-mentioned problems. That is, the present invention relates to a method for producing expanded beads using, as a base material resin, a mixture of a polypropylene-based resin A that is a non-recovered material and a polypropylene-based resin B that is a recovered product of a post-consumer material. The present invention provides a method for producing expanded beads, which enables the production of expanded beads in which variation in the expansion ratio and reduction in the closed cell ratio are inhibited, and which is capable of improving the appearance of an expanded beads molded article that is produced by molding the expanded beads.

Solution to Problems

A method for producing expanded beads of the present invention is a method for producing polypropylene-based resin expanded beads having a bulk density of 10 kg/m$^3$ or more and 200 kg/m$^3$ or less, the method including: impregnating polypropylene-based resin beads dispersed in an aqueous medium in a sealed vessel with a blowing agent, and releasing the polypropylene-based resin beads containing the blowing agent from the sealed vessel together with the aqueous medium under a pressure lower than in the sealed vessel to foam the polypropylene-based resin beads, wherein:

the polypropylene-based resin beads contain, as a base material resin, a mixture of a polypropylene-based resin A having a melting point of 130°C or higher and 155°C or lower and a polypropylene-based resin B,
in the mixture, a blending rate of the polypropylene-based resin A is 40 wt% or more and 97 wt% or less, and a blending rate of the polypropylene-based resin B is 3 wt% or more and 60 wt% or less (the total of the polypropylene-based resin A and the polypropylene-based resin B is 100 wt%),

a melting point difference between the polypropylene-based resin A and the polypropylene-based resin B (a melting point of the polypropylene-based resin B - a melting point of the polypropylene-based resin A) is 10°C or more and 30°C or less,

the polypropylene-based resin B is a recovered product of a post-consumer material,

the polypropylene-based resin B has an ash content of 5 wt% or less with respect to 100 wt% of the polypropylene-based resin B, and

in a melting peak observed in a DSC curve in heat-flux differential scanning calorimetry of the polypropylene-based resin B, the difference between an extrapolated melting start temperature (Tms) and an extrapolated melting end temperature (Tme) of the melting peak, that is, Tme - Tms is 30°C or more.

Advantageous Effects of Invention

The production method of the present invention enables the production of expanded beads in which variation in the expansion ratio and reduction in the closed cell ratio are inhibited although the expanded beads contain a recovered product of a post-consumer material. A foamed molded article that is produced by molding the expanded beads produced by the production method of the present invention has a good appearance.

According to the present invention that exerts the above-mentioned excellent effects, it is possible to effectively utilize a recovered material of a plastic product and to provide expanded beads and an expanded beads molded article that are practically sufficient. Therefore, the present invention greatly contributes to solving environmental problems, such as reduction of carbon dioxide emissions by material recycling and waste product utilization that are required for a recycling-oriented society.

Brief Description of Drawings

Fig. 1 shows an example of a second DSC curve of a recovered resin and a differential curve of the second DSC curve.
Fig. 2 shows an example of a DSC curve that is obtained according to the heat-flux differential scanning calorimetry described in JIS K7122-1987 and that is intended for obtaining a heat quantity at high-temperature peak of expanded beads.

Description of Embodiments

Hereinafter, the method for producing expanded beads of the present invention is described. In the following, the method for producing the polypropylene-based resin expanded beads of the present invention may be simply referred to as the production method of the present invention.

In the present invention, the post-consumer material refers to a material after being used as a product by a consumer. Specifically, as defined in JIS Q14021:2000, the post-consumer material refers to a material that is discharged from the home, or a material that is generated as a product that is no longer usable for its original purpose from commercial facilities, industrial facilities, and various facilities as end users of the product. The post-consumer material include materials returned from distribution channels. In addition, the recovered product of a post-consumer material (that is, a recovered material) refers to a recovered material of these used materials.

Meanwhile, a resin newly prepared as a resin material may be referred to as a virgin resin or a non-recovered resin.

In the following description, a preferable numerical range of the present invention may be appropriately given. In this case, a preferable range, a more preferable range, and a particularly preferable range regarding the upper limit and the lower limit of the numerical range can be determined from all combinations of the upper limit and the lower limit.

The production method of the present invention is a method for producing polypropylene-based resin expanded beads having a bulk density of 10 kg/m$^3$ or more and 200 kg/m$^3$ or less, and the method includes impregnating polypropylene-based resin beads dispersed in an aqueous medium in a sealed vessel with a blowing agent, and releasing the polypropylene-based resin beads containing the blowing agent from the sealed vessel together with the aqueous medium under a pressure lower than in the sealed vessel to expand the polypropylene-based resin beads. According to such a foaming method, polypropylene-based resin expanded beads that exhibit a desired bulk density are easily obtained. In the production method of the present invention, a mixture of a polypropylene-based resin A having a melting point of 130°C or higher and 155°C or lower and a polypropylene-based resin B that is a recovered product of a post-consumer material is used as the base material resin. In the mixture, the blending rate of the polypropylene-based resin A is 40 wt% or more and 97 wt% or less, and the blending rate of the polypropylene-based resin B is 3 wt% or more and 60 wt% or less. Note that the total of the polypropylene-based resin A and the polypropylene-based resin B is 100 wt%. The polypropylene-based resin A and the polypropylene-based resin B are selected so that the melting point difference between the polypropylene-based resin A and the polypropylene-based resin B (the melting point of the polypropylene-based resin B - the melting point of the polypropylene-based resin A) is 10°C or more and 30°C or less. In the production method of the present invention, as the polypropylene-based resin B, a resin material having an ash content of 5 wt% or less and having a difference between an extrapolated melting start temperature (Tms) and an extrapolated melting end temperature (Tme), that is, Tme - Tms of 30°C or more is selected.

In the production method of the present invention having the above-mentioned configuration, good expandability is achieved. Therefore, the production method of the present invention can avoid the influence of the occurrence of variation in the melting point of the polypropylene-based resin B that is a recovered product of a post-consumer material, can inhibit variation in the expansion ratio of the produced expanded beads, and can achieve a high closed cell ratio. In addition, the expanded beads molded article that is produced by molding the expanded beads thus produced has a good appearance.

Details of the present invention are further described below.

[Base material resin]

In the production method of the present invention, a mixture of the polypropylene-based resin A and the polypropylene-based resin B is used as the base material resin. The shape of the base material resin containing the mixture is not particularly limited, but it is preferable that the base material resin is pelletized so as to be easily used in the above-mentioned expanding method.

The term "base material resin" as used herein means a main resin material that constitutes the polypropylene-based resin expanded beads produced by the present invention, and the base material resin may further contain a resin other than the polypropylene-based resin A and the polypropylene-based resin B as long as the object and effects of the present invention are not impaired. The content of the mixture of the polypropylene-based resin A and the polypropylene-based resin B is preferably 90 wt% or more, more preferably 95 wt% or more, and still more preferably 98 wt% or more in 100 wt% of the base material resin.

[Polypropylene-based resin A]

The polypropylene-based resin A is a non-recovered resin. The polypropylene-based resin A may contain substantially only a polypropylene resin that is a virgin resin, and may contain one or more of polymer materials such as a resin other than the polypropylene resin and a thermoplastic elastomer and optional additives as long as the object and effects of the present invention are not impaired. Any of the polymer material and the like other than the polypropylene resin that are contained in the polypropylene-based resin A is preferably a non-recovered material.

The polypropylene resin contained in the polypropylene-based resin A is a resin in which a propylene component unit accounts for 50 wt% or more of the resin, and examples thereof include a propylene homopolymer and copolymers of propylene with other olefins copolymerizable with propylene. Examples of the other olefins copolymerizable with propylene include ethylene and $\alpha$-olefins having 4 or more carbon atoms, such as 1-butene. The copolymer may be a polypropylene-based random copolymer or block copolymer, and may be a terpolymer as well as a binary copolymer. In addition, these polypropylene resins can be used singly or in combination of two or more thereof.

Examples of the polymer material that can be appropriately contained in the polypropylene-based resin A include the following resins other than the polypropylene resin. Examples of such other resins include ethylene-based resins such as high-density polyethylene, medium-density polyethylene, low-density polyethylene, linear low-density polyethylene, linear very-low-density polyethylene, an ethylene-vinyl acetate copolymer, an ethylene-acrylic acid copolymer, an ethylene-acrylic acid ester copolymer, an ethylene-methacrylic acid copolymer, and an ethylene-methacrylic acid ester copolymer; polystyrene-based resins such as polystyrene, impact-resistant polystyrene, and a styrene-acrylonitrile copolymer; acrylic resins such as polymethyl methacrylate; and polyester-based resins such as polylactic acid and polyethylene terephthalate. These resins can be used singly or in combination of two or more thereof.

In addition, as the polymer material, thermoplastic elastomers such as olefin-based elastomers including an ethylene-hexene copolymer and an ethylene-propylene-diene copolymer; styrene-based elastomers including a styrenebutadiene-styrene block copolymer, a styrene-isoprene-styrene block copolymer, and hydrogenated products thereof can also be used. These thermoplastic elastomers can be used singly or in combination of two or more thereof.

In the production method of the present invention, as the above-mentioned polymer material, either of the other resin and the thermoplastic elastomer, or a combination thereof can be used. The blending rate of the polymer material in the polypropylene-based resin A is preferably 20 wt% or less, more preferably 10 wt% or less, and still more preferably 5 wt% or less.

Melting point of polypropylene-based resin A:

The polypropylene-based resin A has a melting point of 130°C or higher and 155°C or lower. If the melting point is lower than 130°C, the expanded beads molded article that is produced by molding the expanded beads according to the present invention may have low stiffness. The melting point is preferably 135°C or higher and more preferably higher than 140°C from the viewpoint that the expanded beads molded article is capable of exhibiting a compressive stress equal to or higher than that of an expanded beads molded article that is produced by molding expanded beads produced using only the polypropylene-based resin A that is a non-recovered material. Meanwhile, if the melting point exceeds 155°C, the amount of steam required for molding during in-mold molding of the expanded beads according to the present invention is very large, so that the manufacturing cost is uneconomically increased. From such a viewpoint, the melting point is preferably 150°C or lower.

The melting point of the polypropylene-based resin A is measured according to JIS K7121-1987. In this case, as for the conditioning of the test piece, "(2) A case where the melting temperature is measured after a certain heat treatment is performed" in the above-mentioned standard is adopted. More specifically, the polypropylene-based resin A is precisely weighed in an amount of approximately 5 mg and used as a sample, and according to the heat-flux differential scanning calorimetry described in JIS K7121-1987, the temperature is raised from 30°C to a temperature 30°C higher than that at the end of the melting peak at a heating rate of 10°C/min, then the raised temperature is maintained for 10 minutes and then lowered to 30°C at a cooling rate of 10°C/min, and then the temperature is raised again from 30°C to a temperature 30°C higher than that at the end of the melting peak at a heating rate of 10°C/min to give a DSC curve. The peak top temperature of the melting peak determined from the obtained DSC curve-(second DSC curve) is defined as the melting point of the polypropylene-based resin A. When two or more melting peaks appear in the DSC curve, the temperature at the peak top of the melting peak having the largest area is defined as the melting point. Examples of the measuring device include a heat-flux differential scanning calorimeter (manufactured by SII NanoTechnology Inc., model number: DSC7020).

Melt flow rate of polypropylene-based resin A:

The melt flow rate (MFR) of the polypropylene-based resin A used in the present invention is not particularly limited, but is preferably 4 g/10 min or more and 12 g/10 min or less. The MFR is measured under the conditions of a test temperature of 230°C and a nominal load of 2.16 kg according to JIS K7210-1:2014.

In the above-mentioned measurement of the MFR and the melting point, when the polypropylene-based resin A is composed of two or more polypropylene-based resins A, a mixture obtained by melt-mixing them is used as a sample. As for the melt-mixing conditions, the resins may be melt-mixed under the same temperature conditions as those of the melt-kneading at the time of producing the polypropylene-based resin beads.

[Polypropylene-based resin B]

The polypropylene-based resin B, which is a recovered product of a post-consumer material, contains a polypropylene resin as with the polypropylene-based resin A, and may contain one or more of polymer materials such as a resin other than the polypropylene resin and a thermoplastic elastomer and optional additives as long as the object and effects of the present invention are not impaired. Since the types and the like of the polypropylene resin, the polymer material, and the additives that can be contained in the polypropylene-based resin B are the same as those of the polypropylene-based resin A described above, the detailed description thereof is omitted here. The polymer material and the like contained in the polypropylene-based resin B are preferably recovered materials.

The content rate of the polymer material in the polypropylene-based resin B is preferably within the range of about 10 wt% or less.

The polypropylene-based resin B that is a recovered product of a post-consumer material is generally prepared by recovering and pulverizing and/or melting a used polypropylene-based resin molded article or the like. The polypropylene-based resin B may be prepared from a foamed molded article such as an expanded beads molded article, or may be prepared from a non-foamed resin molded product. From the viewpoint of reduction of contaminants, mass productivity of materials, and the like, the polypropylene-based resin B is preferably prepared from a non-foamed resin molded product, and particularly preferably contains a specific material derived from any one or a combination of a plastic bottle, a food container, and a packaging film. The polypropylene-based resin B preferably contains 70 wt% or more of the specific material, and is more preferably composed of substantially 100 wt% of the specific material.

Method for preparing polypropylene-based resin B:

The method for preparing the polypropylene-based resin B is not particularly limited, but it is preferable to consider reducing the number of times of thermal histories in the steps of recovering and regenerating for the recovered product. In the above-mentioned preparation method, it is preferable to consider not excessively increasing the heating temperature in the recovery step and the regeneration step.

More specifically, examples of the method for preparing the recovered product of a post-consumer material of a polypropylene-based resin include the following methods.

(Collection and pulverization of used polypropylene-based resin molded article, and production of molten ingot)

A method for collecting a used polypropylene-based resin molded article is not particularly limited. A polypropylene-based resin molded article such as a food container or a beverage bottle has a recycle mark on it, and the polypropylene-based resin molded article is generally separately discarded and collected according to the mark.

(Sorting)

The collected used polypropylene-based resin molded article may contain objects other than the polypropylene-based resin molded article, such as a packaging bag and a label, and thus it is preferable to perform foreign matter sorting. The foreign matters may be visually sorted by an operator, or a sorting machine or the like may be used.

(Production of pulverized product and molten ingot)

It is preferable to use a pulverizer for pulverizing the collected used polypropylene-based resin molded article. Examples of the pulverizer include a compression pulverizer, a shear pulverizer, and an impact pulverizer. As for the pulverization method, for example, the used polypropylene-based resin molded article that has been coarsely pulverized once using an impact pulverizer or the like may be finely pulverized again using a shear pulverizer or the like, or the used polypropylene-based resin molded article may be pulverized at a time using a shear pulverizer or the like. In particular, it is economical and preferable to employ a method in which pulverization is performed in one step while the particle size of the pulverized product is made uniform using a shear pulverizer or the like having a perforated metal sheet or a screen installed at an outlet. The size of the pulverized product is not particularly limited, but is preferably 1 mm or more and 30 mm or less.

The obtained pulverized product is preferably heated and reduced in volume to form a molten ingot. Examples of a heating and volume reducing machine include those of an extruder type and a press type. The treatment temperature during the volume reduction is not particularly limited, but the volume reduction treatment is preferably performed at a temperature as low as possible in order to avoid thermal degradation of the polypropylene-based resin. The volume reduction treatment is more preferably performed at 220°C or lower and not lower than the melting point of the resin.

(Production of polypropylene-based resin recovered product)

It is preferable to pulverize the molten ingot again using the above-mentioned pulverizer or the like, melt the pulverized ingot using an extruder, and then pelletize the molten ingot to give a polypropylene-based resin recovered product pellet.

As for the pulverizer, the same pulverizer as described above can be used. As for the extruder, a single-screw extruder, a twin-screw extruder, or the like can be used, but a single-screw extruder is preferably used from the viewpoint of preventing degradation of the resin. The temperature of the extruder is not particularly limited, but melting by the extruder is preferably performed at a temperature as low as possible in order to avoid thermal degradation of the polypropylene-based resin. The melting by the extruder is preferably performed at 220°C or lower and not lower than the melting point of the resin.

As described above, it is preferable that the polypropylene-based resin melted by the extruder is once passed through a filter to remove foreign matters. As for the filter, woven wire mesh, sintered metal, or the like is used, but it is economical and preferable to use woven wire mesh.

(Pelletization)

The polypropylene-based resin melted as described above is pelletized by an under-water cut method in which the molten resin while being extruded from a die into water or mist is continuously cut with a rotary blade attached to the front surface of the die and solidified, a strand cut method in which the molten resin is continuously extruded from a die in a strand shape, then cooled and solidified in a water tank, and then cut with a cutting machine, or the like. The strand cut method is economical and preferable.

The size of the pellet is not particularly limited, but the weight of the pellet is preferably 1 mg to 30 mg.

The method for preparing the recovered product of a post-consumer material of a polypropylene-based resin has been described above, but the polypropylene-based resin B used in the production method of the present invention may be a recovered material produced by a production method different from the above-mentioned method, or a commercially available product that is commercially available as a post-consumer recycled material.

Melting point of polypropylene-based resin B:

Post-consumer materials of resin products are often a mixture of various plastic products or a mixture of plastic products manufactured at different times. Therefore, in the recovered product of a post-consumer material, the raw material properties are likely to fluctuate, and particularly, the melting point is likely to fluctuate.

In particular, the polypropylene-based resin is likely to be changed in the physical properties due to variation in the thermal history. Therefore, the following presumption was made about a case where a mixture of a polypropylene-based recovered resin, which is likely to cause a fluctuation in melting point, and a polypropylene-based non-recovered resin is used. That is, it was presumed that it is difficult to set an appropriate foaming temperature and achieve good foaming unless the relation between the melting point of the recovered resin and the melting point of the non-recovered resin is within an appropriate range. From the above-mentioned viewpoint, in the method for producing expanded beads of the present invention, temperature conditions such as the foaming temperature are appropriately adjusted. Specifically, in the present invention, the value obtained by subtracting the melting point of the polypropylene-based resin A from the melting point of the polypropylene-based resin B is adjusted to 10°C or more and 30°C or less. As described above, when the melting point of the polypropylene-based resin B is higher than the melting point of the polypropylene-based resin A by a difference within the predetermined range, temperature conditions such as the foaming temperature can be set on the basis of the melting point of the polypropylene-based resin A, so that good expandability can be achieved. For example, in the production method of the present invention, although a recovered product of a post-consumer material is used, the expanding step can be performed by setting the temperature conditions such as the foaming temperature according to those in the expanding step performed using only the polypropylene-based resin A that is a non-recovered resin.

If the melting point difference between the polypropylene-based resin B and the polypropylene-based resin A is less than 10°C, variation in the expansion ratio of the obtained expanded beads is remarkable, and the appearance of an expanded beads molded article that is produced by molding the expanded beads may be poor.

Meanwhile, if the melting point difference exceeds 30°C, the difference between the appropriate foaming temperature of the polyamide-based resin A and the appropriate foaming temperature of the polyamide-based resin B is too large, so that the closed cell ratio may be reduced. When an expanded beads molded article is produced by molding expanded beads containing the polypropylene-based resin A and the polypropylene-based resin B having such a large melting point difference, it is necessary to sufficiently increase the molding pressure in consideration of the melting point of the polypropylene-based resin B. However, under such an increased molding pressure, melting of the polypropylene-based resin A excessively proceeds, and as a result, the expanded beads may not be substantially molded into an expanded beads molded article.

The melting point difference is preferably 10°C or more and 20°C or less from the viewpoint of more satisfactorily inhibiting the variation in the expansion ratio of the produced expanded beads.

The polypropylene-based resin B is preferably selected from recovered products of post-consumer materials that exhibit a melting point of, for example, 150°C or higher and 170°C or lower as long as the above-mentioned melting point difference can be realized. The melting point of the polypropylene-based resin B is measured in the same manner as in the above-mentioned method for measuring the melting point of the polypropylene-based resin A. However, an arithmetic mean value of measured values of 10 or more different test pieces is adopted as the melting point of the polypropylene-based resin B.

Heat of fusion of polypropylene-based resin B:

The heat of fusion of the polypropylene-based resin B is preferably 70 J/g or more and 120 J/g or less, and more preferably 80 J/g or more and 110 J/g or less.

The heat of fusion of the polypropylene-based resin B is measured using a heat-flux differential scanning calorimeter according to JIS K7122-1987. First, according to "A case where the heat of fusion is measured after a certain heat treatment is performed", a test piece is conditioned with the increase rate of the heating temperature and the decrease rate of the cooling temperature being set to 10°C/min. Thereafter, heat-flux DSC (that is, differential scanning calorimetry) is performed with the increase rate of the heating temperature being set to 10°C/min and a second DSC curve is obtained. The value of the heat of fusion can be determined by determining the area of the melting peak on the basis of the obtained DSC curve. When a plurality of melting peaks appear in the DSC curve, the total area of the plurality of melting peaks is defined as the heat of fusion.

Melt flow rate of polypropylene-based resin B:

The melt flow rate (MFR) of the polypropylene-based resin B used in the present invention is not particularly limited, but is preferably 3 g/10 min or more and 15 g/10 min or less. The MFR is measured under the conditions of a test temperature of 230°C and a nominal load of 2.16 kg according to JIS K7210-1:2014. In the description, the melt flow rate may be abbreviated as MFR.

The difference between the MFR of the polypropylene-based resin B and the MFR of the polypropylene-based resin A is preferably 5 or less, and more preferably 3 or less. The MFR of the polypropylene-based resin B is preferably higher than the MFR of the polypropylene-based resin A.

Ash content of polypropylene-based resin B:

In the production method of the present invention, a polypropylene-based resin B having an ash content of 5 wt% or less is used.

In the recovered product of a post-consumer material, an ash component may be mixed as contaminants at the time of use or recovery. According to the findings by the present inventors, it was presumed that the ash component, which is contaminants mixed in the polypropylene-based resin B, serves as a core of cells in the expanding step, and induces refinement of the cells in the produced expanded beads. It was presumed that, consequently, the cells that constitute the expanded beads are easily broken, the closed cell ratio of the produced expanded beads is reduced, and variation in the expansion ratio occurs. Therefore, in the present invention, on the basis of the above-mentioned findings, a recovered product of a post-consumer material having an ash content of 5 wt% or less in 100 wt% of the polypropylene-based resin B is used as the polypropylene-based resin B.

The ash content of the polypropylene-based resin B is preferably 1 wt% or less, more preferably 0.5 wt% or less, still more preferably 0.2 wt% or less, and particularly preferably 0.1 wt% or less from the viewpoint of more satisfactorily inhibiting refinement of the cells and variation in the expansion ratio. Meanwhile, by the result of containing of the ash component in the polypropylene-based resin B, it is considered that generation of excessively large cells can be inhibited during the production of the expanded beads. From the above-mentioned viewpoint, the lower limit of the ash content is about 0.01 wt%.

Method for measuring ash content:

Examples of the ash component of the polypropylene-based resin B include inorganic substances containing elements such as calcium, sodium, and silicon.

The ash content can be measured according to JIS K6226-2:2003. As the measuring device, for example, a thermogravimetric analyzer TGA701 manufactured by LECO Corporation can be used. Specifically, the polypropylene-based resin B as a measurement sample is precisely weighed in an amount of 5 g and then put in a crucible, a nitrogen stream is introduced into a heating furnace, and the following steps are performed. That is, (1) the heating furnace is heated at a heating rate of 10°C/min from room temperature to 105°C in a nitrogen atmosphere, then (2) the sample is held at 105°C until the measured weight reaches equilibrium, (3) the heating furnace is heated at a heating rate of 10°C/min from 105°C to 550°C, (4) the sample is held at 550°C until the measured weight reaches equilibrium, (5) the heating furnace airflow is changed from nitrogen to air and the heating furnace is heated at a heating rate of 10°C/min from 550°C to 950°C, (6) a weight W1 of the combustion residue after the sample is held at 950°C for 10 minutes is determined, and (7) the combustion residue is cooled to room temperature. A value (wt%) obtained by dividing the weight W1 of the combustion residue by the weight of the measurement sample (5 g) put in the crucible and multiplying the resulting value by 100 is defined as the ash content of the polypropylene-based resin B. For the measurement of the ash content, two or more different measurement samples are subjected to the measurement, and the arithmetic mean value of the measurements is adopted.

Melting temperature difference of polypropylene-based resin B:

In the production method of the present invention, the melting temperature difference of the polypropylene-based resin B is 30°C or more. Herein, the melting temperature difference refers to, in a melting peak observed in a second DSC curve in heat-flux differential scanning calorimetry of the polypropylene-based resin B, the difference between an extrapolated melting start temperature (Tms) and an extrapolated melting end temperature (Tme) of the melting peak, that is, Tme - Tms.

Since such a polypropylene-based resin B is used, an expanded beads molded article that is produced by molding the expanded beads produced by the production method of the present invention has a good appearance. Although the mechanism of such appearance improvement is not clear, it was presumed that since the expanded beads contain the polypropylene-based resin B having the melting temperature difference of 30°C or more, the polypropylene-based resin B is gently melted during the production of the expanded beads molded article, and cells in the expanded beads tend to be hardly broken. It was presumed that a foamed molded article having a high closed cell ratio and a good appearance is consequently produced.

The melting temperature difference of the polypropylene-based resin B is preferably 30°C or more, more preferably 35°C or more, and still more preferably 40°C or more from the viewpoint of improving the appearance of the expanded beads molded article.

Meanwhile, the upper limit of the melting point difference of the polypropylene-based resin B is not particularly limited, but is preferably 100°C or less, more preferably 90°C or less, still more preferably 85°C or less, and particularly preferably 80°C or less.

For example, the melting temperature difference of the polypropylene-based resin B used in the present invention is preferably 30°C or more and 100°C or less, more preferably 30°C or more and 90°C or less, still more preferably 35°C or more and 85°C or less, and particularly preferably 35°C or more and 80°C or less.

As described above, it is important that the novel finding of using the polypropylene-based resin B having the melting temperature difference of 30°C or more is carried out on the premise that the following requirements are satisfied: the blending rates of the polypropylene-based resin A and the polypropylene-based resin B are each adjusted within the predetermined range, and the melting point difference between the polypropylene-based resin A and the polypropylene-based resin B is adjusted within the predetermined range.

In the present invention, a melting temperature difference of the polypropylene-based resin A is not particularly limited, but is preferably less than 30°C from the viewpoint that the temperature conditions during the expanding step are easily maintained. The melting temperature difference of the polypropylene-based resin A is measured in the same manner as in the measurement of the melting temperature difference of the polypropylene-based resin B described later.

Method for measuring melting temperature difference:

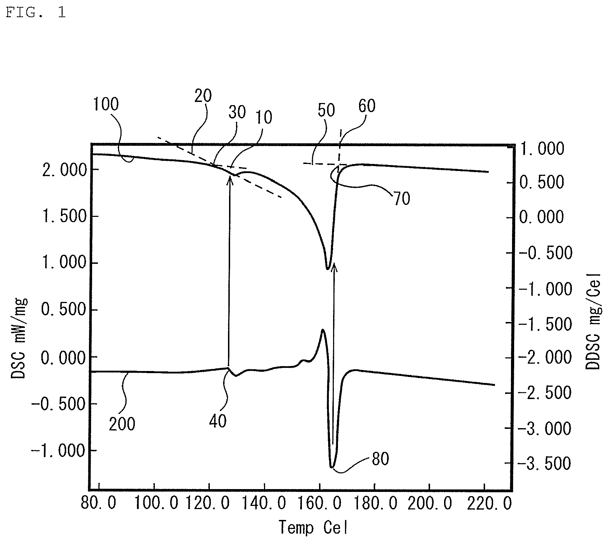

A method for measuring a difference between an extrapolated melting start temperature (Tms) and an extrapolated melting end temperature (Tme) of the melting peak, that is, Tme - Tms is described with reference to Fig. 1.

Fig. 1 is a graph showing a second DSC curve 100 of a polypropylene-based resin B that is a recovered product of a post-consumer material and a DDSC curve 200 that is a differential curve of the DSC curve 100.

The DSC curve 100 can be obtained as follows. According to the heat-flux differential scanning calorimetry of JIS K7121-1987, resin beads made of the polypropylene-based resin B are precisely weighed in an amount of about 5 mg and used as a test piece, and a DSC curve generated when the resin beads are heated and melted at a heating rate of 10°C/min from 30°C to a temperature 30°C higher than that at the end of the melting peak is defined as a first DSC curve. Next, a DSC curve generated when the resin beads are held at the above-mentioned temperature 30°C higher than that at the end of the melting peak for 10 minutes, then cooled to 30°C at a cooling rate of 10°C/min, and heated and melted again at a heating rate of 10°C/min to the temperature 30°C higher than that at the end of the melting peak is defined as the second DSC curve 100. It is to be noted that as the difference between the extrapolated melting start temperature (Tms) and the extrapolated melting end temperature (Tme) of the melting peak, that is, Tme - Tms of the polypropylene-based resin B, the arithmetic mean value of measured values of 10 or more different test pieces is adopted.

In the second DSC curve 100 shown in Fig. 1, two melting peaks, that is, a small melting peak observed on the low-temperature side and a large melting peak observed on the high-temperature side are shown.

The extrapolated melting start temperature (Tms) is the temperature at an intersection 30 between a straight line 10, which is obtained by extending a baseline on the low-temperature side to the high-temperature side, and a tangent line 20, which is drawn at a point where the gradient is maximum on a curve on the lowest-temperature side of the melting peak in the second DSC curve 100.

The extrapolated melting end temperature (Tme) is the temperature at an intersection 70 between a straight line 50, which is obtained by extending a baseline on the high-temperature side to the low-temperature side, and a tangent line 60, which is drawn at a point where the gradient is maximum on a curve on the highest-temperature side of the melting peak in the second DSC curve 100.

The difference between the extrapolated melting start temperature (Tms) and the extrapolated melting end temperature (Tme) of the melting peak, that is, Tme - Tms is obtained by subtracting the obtained extrapolated melting start temperature (Tms) from the obtained extrapolated melting end temperature (Tme).

The above-mentioned method for determining the extrapolated melting start temperature (Tms) and the extrapolated melting end temperature (Tme) is in accordance with the method for determining the "extrapolated melting start temperature" and the "extrapolated melting end temperature" described in "Determination of melting temperature" in JIS K7121-1987.

The polypropylene-based resin B, which is a recovered product of a post-consumer material, has often been subjected to a treatment such as pelletization after being melt-extruded at the time of production. The thermal history in the treatment can have an influence on the generation of the melting peak. Therefore, in the present invention, the extrapolated melting start temperature (Tms) and the extrapolated melting end temperature (Tme) are determined using the second DSC curve 100 in order to eliminate the influence.

The above-mentioned melting temperature difference is an index for identifying the melting temperature range of the polypropylene-based resin B. The number of peaks observed in the second DSC curve varies depending on the resin material used, and may be one or more. In either case, the temperature at an intersection between a straight line, which is obtained by extending a baseline on the low-temperature side to the high-temperature side, and a tangent line, which is drawn at a point where the gradient is maximum on a curve on the lowest-temperature side of the melting peak is defined as the extrapolated melting start temperature (Tms). Similarly, the temperature at an intersection between a straight line, which is obtained by extending a baseline on the high-temperature side to the low-temperature side, and a tangent line, which is drawn at a point where the gradient is maximum on a curve on the highest-temperature side of the melting peak in the second DSC curve is defined as the extrapolated melting end temperature (Tme).

In addition, regarding the extrapolated melting start temperature (Tms) in the present invention, even when a change in the melting temperature appearing on the lowest-temperature side is not shown as a peak, the change is grasped as a change indicating the extrapolated melting start temperature (Tms), that is, a melting peak. In this case, as shown in Fig. 1, the DDSC curve 200 is obtained along with the DSC curve 100. Herein, the DDSC curve is a differential curve of the second DSC curve. Then, the temperature at an inflection point (a first inflection point 40) observed on the lowest-temperature side on the DDSC curve 200 is regarded as the extrapolated melting start temperature (Tms) in the DSC curve 100. That is, in the determination of the melting temperature difference in the present invention, a change in the DSC curve observed as an inflection point in the differential curve (DDSC curve) of the second DSC curve is regarded as a melting peak. The lower limit of the height of the peak having the first inflection point of the DDSC curve as the peak top is about 0.01 mW/°C. The peak height of the first inflection point of the DDSC curve can be determined from the difference between the first inflection point of the DDSC curve and the baseline on the lower-temperature side than the first inflection point of the DDSC curve.

In addition, regarding the extrapolated melting end temperature (Tme), similarly to the extrapolated melting start temperature (Tms), even when a change in the melting temperature appearing on the highest-temperature side is not shown as a peak, the change is grasped as a change indicating the extrapolated melting end temperature (Tme), that is, a melting peak. In this case, the temperature at an inflection point (a high-temperature side inflection point 80) observed on the highest-temperature side on the DDSC curve is regarded as the extrapolated melting end temperature in the DSC curve. The lower limit of the height of the peak having the high-temperature side inflection point of the DDSC curve as the peak top is about 0.01 mW/°C. The peak height of the high-temperature side inflection point of the DDSC curve can be determined from the difference between the high-temperature side inflection point of the DDSC curve and the baseline on the higher-temperature side than the high-temperature side inflection point of the DDSC curve.

The extrapolated melting start temperature of the polypropylene-based resin B is preferably equal to or lower than the extrapolated melting start temperature of the polypropylene-based resin A. It is considered that when the polypropylene-based resin A and the polypropylene-based resin B used in the production method of the present invention satisfy the above-mentioned relation, the resin is improved in spreadability during in-mold molding and voids between expanded beads are easily filled, so that it is possible to improve the appearance of the expanded beads molded article and increase the closed cell ratio. From the above-mentioned viewpoint, as for the polypropylene-based resin B having a heat of fusion that is equal to or lower than the extrapolated melting start temperature of the polypropylene-based resin A, the heat of fusion is more preferably 15 J/g or more, still more preferably 20 J/g or more, and particularly preferably 25 J/g or more.

The extrapolated melting start temperature of the polypropylene-based resin A can be determined by the same method as that for determining the extrapolated melting start temperature of the polypropylene-based resin B. As for the polypropylene-based resin B having the heat of fusion that is equal to or lower than the extrapolated melting start temperature of the polypropylene-based resin A, the heat of fusion can be determined as follows. First, in the second DSC curve of the polypropylene-based resin B, a straight line parallel to the vertical axis of the graph is drawn at the extrapolated melting start temperature of the polypropylene-based resin A. Next, the area of a portion surrounded by a straight line obtained by extending the baseline on the low-temperature side of the second DSC curve of the polypropylene-based resin B to the high-temperature side, the straight line drawn in parallel to the vertical axis of the graph at the extrapolated melting start temperature of the polypropylene-based resin A, and the DSC curve is determined. An endothermic amount corresponding to the above-mentioned area is the heat of fusion of the polypropylene-based resin B having an extrapolated melting start temperature that is equal to or lower than the extrapolated melting start temperature of the polypropylene-based resin A.

When the polypropylene-based resin B has two or more melting peaks in the second DSC curve of the polypropylene-based resin B, it is preferable that the peaks are not completely separated. The phrase that the peaks are not completely separated means, in the second DSC curve, that the valley between the peaks does not intersect with either a straight line obtained by extending the baseline on the low-temperature side to the high-temperature side or a straight line obtained by extending the baseline on the high-temperature side to the low-temperature side.

Content of ethylene component in polypropylene-based resin B:

As described above, the polypropylene-based resin B may contain one or more of polymer materials such as a resin other than the polypropylene resin and a thermoplastic elastomer, and may contain, for example, an ethylene component and a butene component. When the expanded beads contain a large amount of the ethylene component, an expanded beads molded article that is produced by molding the expanded beads tends to have a reduced compressive stress. This is presumed to be because the incorporation of the ethylene component lowers the regularity of the crystal structure of the resin to lower the melting point, and causes deterioration of physical properties of the resin. From such a viewpoint, the content of the ethylene component in 100 wt% of the polypropylene-based resin B is preferably 3 wt% or less, and more preferably 2 wt% or less. The lower limit of the content of the ethylene component in 100 wt% of the polypropylene-based resin B is most preferably 0 wt%, but the lower limit of the content is about 0.05 wt% or more because the polypropylene-based resin B is a recovered resin. In the present invention, the ethylene component refers to a structural unit formed of ethylene. The content of the ethylene component in the polypropylene-based resin B can be measured by a known method in which the content is determined from an IR spectrum. The ethylene component content of the polypropylene-based resin B can be determined, for example, by a method described in Polymer Analysis Handbook (edited by The Research Committee for Polymer Analysis, the Japan Society for Analytical Chemistry, publication date: January 1995, publisher: Kinokuniya Co., Ltd., page number and item name: 608 to 609 "II. 2.3 2.3.2 Qualitative Methods" and 615 to 618 "II. 2.3 2.3.4 Propylene/Ethylene Copolymer"). That is, the above-mentioned ethylene component content can be determined by a method of quantifying the ethylene component content from a relation between, for example, a value obtained by correcting the absorbance of ethylene by a predetermined coefficient and the thickness of a film-shaped test piece. The butene component content of the polypropylene-based resin B can be determined, for example, by a method described in Polymer Analysis Handbook (edited by The Research Committee for Polymer Analysis, the Japan Society for Analytical Chemistry, publication date: January 1995, publisher: Kinokuniya Co., Ltd., page number and item name: 608 to 609 "II. 2.3 2.3.2 Qualitative Methods" and 618 to 619 "II. 2.3 2.3.5 Propylene/Butene Copolymer"). That is, the above-mentioned butene component content can be determined by a method of quantifying the butene component content from a relation between, for example, a value obtained by correcting the absorbance of butene by a predetermined coefficient and the thickness of a film-shaped test piece.

In the above-mentioned measurement of the polypropylene-based resin B, when the polypropylene-based resin B is composed of a recovered product of a post-consumer material of two or more polypropylene-based resins, a product obtained by melt-mixing them is used as a sample. As for the melt-mixing conditions, the resins may be melt-mixed under the same temperature conditions as those of the melt-kneading at the time of producing the polypropylene-based resin beads.

[Blending rates of polypropylene-based resin A and polypropylene-based resin B]

In the production method of the present invention, as for the mixture of the polypropylene-based resin A and the polypropylene-based resin B, the blending rates of these resin materials are each adjusted to fall within a predetermined range. Specifically, with respect to 100 wt% in total of the polypropylene-based resin A and the polypropylene-based resin B, the blending rate of the polypropylene-based resin A in the mixture is adjusted to 40 wt% or more and 97 wt% or less, and the blending rate of the polypropylene-based resin B is adjusted to 3 wt% or more and 60 wt% or less. If the blending rate of the polypropylene-based resin A in 100 wt% of the mixture is too low, variation in the expansion ratio and the closed cell ratio of the obtained expanded beads tend to be reduced. From such a viewpoint, the blending rate of the polypropylene-based resin A in 100 wt% of the mixture is preferably 50 wt% or more, more preferably more than 50 wt%, still more preferably 60 wt% or more, and particularly preferably 70 wt% or more.

Meanwhile, the blending rate of the polypropylene-based resin A in 100 wt% of the mixture is preferably 93 wt% or less, more preferably 90 wt% or less, and still more preferably 80 wt% or less from the viewpoint of using a large amount of a post-consumer material while inhibiting variation in the expansion ratio and reduction in the closed cell ratio of the obtained expanded beads.

For example, from the viewpoint of using a large amount of a post-consumer material while inhibiting variation in the expansion ratio and reduction in the closed cell ratio of the expanded beads, it is preferable to adjust the blending rate of the polypropylene-based resin A to more than 50 wt% and 80 wt% or less and adjust the blending rate of the polypropylene-based resin B to 20 wt% or more and less than 50 wt% in 100 wt% of the mixture. Note that the total of the polypropylene-based resin A and the polypropylene-based resin B is 100 wt%.

[Ethylene component content of expanded beads]

As described above, the base material resin that is a mixture of the polypropylene-based resin A and the polypropylene-based resin B used in the production method of the present invention may contain one or more of polymer materials such as a resin other than the polypropylene resin and a thermoplastic elastomer, and the base material resin may contain, for example, an ethylene component and/or a butene component. When the expanded beads contain a large amount of the ethylene component, an expanded beads molded article that is produced by molding the expanded beads tends to have a reduced compressive stress. This is presumed to be because the incorporation of the ethylene component lowers the regularity of the crystal structure of the resin to lower the melting point, and causes deterioration of physical properties of the resin. From such a viewpoint, the content of the ethylene component in the expanded beads is preferably less than 4 wt%, more preferably 3 wt% or less, and still more preferably 2 wt% or less. The term "ethylene component" as used herein is defined in the same manner as the above-mentioned ethylene component contained in the polypropylene-based resin B.

The content of the ethylene component in the expanded beads can be calculated by the same method as the method for calculating the ethylene component contained in the polypropylene-based resin B except that the expanded beads produced by the production method of the present invention are used as a sample.

[Additives]

In the expanded beads used in the present invention, one or more additives may be further used together with the above-mentioned polypropylene-based resin A and the polypropylene-based resin B as long as the object and effects of the present invention are not impaired. Examples of the additives include, but are not limited to, a colorant, a nucleating agent such as boric acid, an antioxidant, an ultraviolet inhibitor, a lubricant, and a cell controlling agent. The blending rate of the additives may be appropriately determined with reference to a conventionally known method for producing polypropylene-based resin expanded beads.

[Configuration of expanded beads]

The expanded beads produced by the production method of the present invention may be single-layer beads or multilayer resin expanded beads having a covering layer made of a polyolefin-based resin on the surface of the beads (core layer). The configuration of the covering layer can be the same as that of the covering layer of conventionally known multilayer resin expanded beads.

For example, when a polyolefin-based resin is used as the resin that constitutes the covering layer, the polyolefin-based resin may be composed of only a polyolefin resin, or may contain, in addition to the polyolefin resin, one or more of polymer materials such as a resin other than the polyolefin resin and an elastomer resin and/or optional additives. Examples of the polyolefin resin include, but are not limited to, a polypropylene resin or a copolymer of a polypropylene resin and another resin, and a polyethylene resin or a copolymer of a polyethylene resin and another resin. The resin that constitutes the covering layer may contain a recovered product of a post-consumer material of a polypropylene-based resin, or may be composed of only a non-recovered resin. It is preferable that the resin that constitutes the covering layer does not contain a recovered product of a post-consumer material from the viewpoint of easily obtaining an expanded beads molded article excellent in the fusion-bonding property between expanded beads, secondary expandability, and compressive stress.

The melting point of the polyolefin-based resin that constitutes the covering layer is not particularly limited, but is preferably a temperature lower than the melting point or softening point of the resin material that constitutes the core layer. In this case, when the multilayer resin expanded beads produced by the production method of the present invention are used, and the multilayer resin expanded beads is heated to a temperature at which the core layer of the expanded beads can be secondary expanded and in-mold molding is performed, the covering layer is melted before the core layer is melted, so that the fusion-bonding property between adjacent expanded beads is satisfactory.

The above-mentioned melting point and softening point of the resin material that constitutes the core layer refer to the melting point or softening point of the base material resin that constitutes the core layer and that is composed of the polypropylene-based resin A and the polypropylene-based resin B.

In the above-mentioned covering layer, one or more additives may be used as long as the object and effects of the present invention are not impaired. The additives used may be the same as those added to the expanded beads that constitute the core layer. The blending rate of the additives may be appropriately determined with reference to a conventionally known method for producing polypropylene-based resin expanded beads.

The weight ratio between the core layer and the covering layer is not particularly limited, but from the viewpoint of improving the fusion-bonding property of the expanded beads and increasing the consumption of the post-consumer material, the amount of the covering layer is preferably 20 parts by weight or less, more preferably 10 parts by weight or less, and still more preferably 8 parts by weight or less with respect to 100 parts by weight of the core layer. The lower limit of the amount of the covering layer with respect to 100 parts by weight of the core layer is about 1 part by weight.

The covering layer may be either in a foamed state or a non-foamed state, but is preferably a resin layer in a substantially non-foamed state in order to make the obtained expanded beads molded article excellent in mechanical strength. Note that the term "substantially non-foamed" as used herein encompasses not only resin layers having no cells at all, but also resin layers having a small number of very small cells as long as the mechanical strength of the obtained expanded beads molded article is not affected. It is to be noted that the above-mentioned covering layer having no cells at all includes a covering layer in which cells once formed during foaming of the resin beads are melted and broken to be eliminated.

In the multilayer resin expanded beads, the core layer may be completely covered with the covering layer, or a part of the core layer may be exposed. Examples of the structure in which the core layer is exposed include a structure in which only the side surface of a circular cylindrical core layer is covered with a covering layer, and the core layer is exposed at the upper surface or the bottom surface of the circular cylinder.

[Steps of production method of the present invention]

Hereinafter, an embodiment of the production method of the present invention is described in several separate steps. Specifically, the production method of the present invention is described separately for a mixing step, an extrusion step, and an expanding step. In the production method of the present invention, a part of these steps may be changed or a different step may be further added as long as the object and effects of the present invention are not impaired. In addition, the steps may be performed independently of each other or may be partially or entirely overlapped.

[Mixing step]

In the production method of the present invention, first, a mixing step is performed. The mixing step is a step of obtaining a base material resin containing a mixture of the polypropylene-based resin A and the polypropylene-based resin B. Specifically, the mixing step is, for example, a step of supplying the polypropylene-based resin A, the polypropylene-based resin B, and an additive used as appropriate to an extruder, and melting and kneading the supplied materials to give a molten resin kneaded product.

In this step, the blending rates of the polypropylene-based resin A and the polypropylene-based resin B in the molten resin kneaded product are adjusted to be the above-mentioned blending rates.

When multilayer resin expanded beads are produced by the production method of the present invention, it is preferable to independently perform the above-mentioned mixing step for preparing a core layer-constituting material that constitutes a core layer, and a mixing step for a covering layer, which is different from the above-mentioned mixing step and is for preparing a covering layer-constituting material that constitutes a covering layer. The core layer-constituting material contains at least the polypropylene-based resin A and the polypropylene-based resin B.

[Extrusion step]

Next, an extrusion step of extruding the mixture obtained in the above-mentioned mixing step from an extruder and cutting the mixture to give polypropylene-based resin beads is performed.

Specifically, for example, the mixture is extruded from an extrusion die provided on the downstream side of the extruder to form a strand. Next, the strand is cut into a desired size by a pelletizer or the like to give polypropylene-based resin beads (hereinafter also simply referred to as resin beads). The strand has, for example, a circular cross section orthogonal to the extrusion direction. The resin beads thus obtained have, for example, a cylindrical shape such as a circular cylindrical shape.

In the case of producing multilayer resin expanded beads having a multilayer structure including a covering layer, an extrusion device for co-extrusion is preferably used. Specifically, the core layer-constituting material and the covering layer-constituting material are joined in a co-extrusion die provided on the downstream side of the extruder, and the core layer-constituting material and the covering layer-constituting material are co-extruded in a state where the covering layer-constituting material is laminated on the outer periphery of the core layer-constituting material to form a strand having a multilayer structure. Next, the strand is cut into a desired size in the same manner as described above to give resin beads having a multilayer structure including a core layer and a covering layer that covers the core layer.

[Foaming step]

Next, an expanding step is performed. Specifically, the resin beads obtained in the extrusion step are dispersed in an aqueous medium in a sealed vessel and impregnated with a blowing agent, and the resin beads containing the blowing agent are released from the sealed vessel together with the aqueous medium under a pressure lower than in the sealed vessel to be foamed. Thus, polypropylene-based resin expanded beads having a bulk density of 10 kg/m$^3$ or more and 200 kg/m$^3$ or less are produced. The expanding step is described in detail below separately for a dispersion step, a blowing agent impregnation step, and a release step.

(Dispersion step)

The dispersion step is a step of dispersing the resin beads obtained in the extrusion step in an aqueous medium contained in a vessel. The aqueous medium contains an inorganic dispersant. The aqueous medium may also appropriately contain optional additives other than the inorganic dispersant.

Aqueous medium:

The aqueous medium is a medium for dispersing the resin beads in the vessel. Examples of the aqueous medium include water, alcohols, glycols, and glycerin. Among them, water is preferable from the viewpoint of ease of wastewater treatment and the like. From the viewpoint of improving the dispersibility of the resin beads and the productivity of the expanded beads, the addition amount of the resin beads to the aqueous medium is preferably 10 parts by weight or more and 100 parts by weight or less, and more preferably 20 parts by weight or more and 80 parts by weight or less with respect to 100 parts by weight of the aqueous medium.

Inorganic dispersant:

The inorganic dispersant is used for satisfactorily dispersing the resin beads in the aqueous medium and inhibiting blocking between expanded beads during the expanding step.
From the viewpoint of easily inhibiting fusion between the expanded beads in the release step described later while maintaining the in-mold moldability of the expanded beads, the addition amount of the inorganic dispersant is preferably 0.01 parts by weight or more and 2 parts by weight or less, more preferably 0.02 parts by weight or more and 1 part by weight or less, and still more preferably 0.03 parts by weight or more and 0.8 parts by weight or less with respect to 100 parts by weight of the resin beads.
As the inorganic dispersant, for example, inorganic fine particles such as aluminum oxide, tricalcium phosphate, magnesium pyrophosphate, zinc oxide, kaolin, and mica can be used. These inorganic fine particles may be used singly or in combination of two or more thereof.

Optional additives:

The aqueous medium may further contain one or more optional additives such as a dispersion auxiliary agent and a surfactant in addition to the inorganic dispersant. Examples of the dispersion auxiliary agent include aluminum sulfate. Examples of the surfactant include anionic surfactants such as sodium alkylbenzene sulfonate, sodium dodecylbenzene sulfonate, and sodium alkanesulfonate. The surfactant may be used singly or in combination of two or more thereof. These additives are usually added in an amount within the range of 0.001 parts by weight or more and 1 part by weight or less with respect to 100 parts by weight of the resin beads.

(Blowing agent impregnation step)

The blowing agent impregnation step is performed after the above-mentioned dispersion step is performed or at a timing partially or entirely overlapping with the dispersion step.
The blowing agent impregnation step is a step of impregnating resin beads dispersed in an aqueous medium with a blowing agent, and is performed in a general method for producing expanded beads. For example, a sealable vessel containing resin beads is sealed, and a physical blowing agent is added into the sealed vessel. As a result, the resin beads can be impregnated with the physical blowing agent to give expandable resin beads.
The physical blowing agent may be added into the sealed vessel at any timing before the resin beads are foamed. It is also possible to add a blowing agent in a solid state or a liquid state to the aqueous medium together with the resin beads during the dispersion step, and then impregnate the resin beads with the blowing agent that has turned into a gaseous state by heating or the like. Alternatively, it is also possible to inject a gaseous blowing agent into the sealed vessel to impregnate the resin beads with the gaseous blowing agent in parallel with the dispersion step or after completion of the dispersion step.

Blowing agent:

The blowing agent used in the present invention is appropriately selected from general blowing agents used for obtaining expanded beads, and a physical blowing agent is preferable.

Specifically, as the physical blowing agent, an inorganic physical blowing agent and/or an organic physical blowing agent can be used. Examples of the inorganic physical blowing agent include carbon dioxide, air, nitrogen, helium, argon, and water. Examples of the organic physical blowing agent include aliphatic hydrocarbons such as propane, butane, and hexane, alicyclic hydrocarbons such as cyclopentane and cyclohexane, and halogenated hydrocarbons such as methyl chloride, ethyl chloride, methylene chloride, 2,3,3,3-tetrafluoropropene, 1,3,3,3-tetrafluoropropene, 1-chloro-3,3,3-trifluoropropene, 1-chloro-2,3,3,3-tetrafluoropropene, and 1,1,1,4,4,4-hexafluoro-2-butene.

These physical blowing agents may be used singly or in combination of two or more thereof. Among these blowing agents, a blowing agent containing an inorganic physical blowing agent such as carbon dioxide, nitrogen, or air as a main component is preferably used, and carbon dioxide is more preferably used. In the present invention, the phrase "contain an inorganic physical blowing agent as a main component" means that the physical blowing agent contains 50 mol% or more of the inorganic physical blowing agent. The physical blowing agent preferably contains 70 mol% or more, more preferably 90 mol% or more of the inorganic physical blowing agent, and it is still more preferable that the physical blowing agent is composed of only the inorganic physical blowing agent.

The addition amount of the physical blowing agent is appropriately determined according to the type of the base material resin that constitutes the resin beads, the type of the blowing agent, the intended bulk density of the expanded beads, and the like. For example, when carbon dioxide is used as the physical blowing agent, the addition amount of carbon dioxide is preferably 0.1 parts by weight or more and 30 parts by weight or less, more preferably 0.5 parts by weight or more and 15 parts by weight or less, and still more preferably 1 part by weight or more and 10 parts by weight or less with respect to 100 parts by weight of the resin beads.

High-temperature peak:

In order to adjust the crystal state of the obtained expanded beads, in the above-mentioned dispersion step and/or blowing agent impregnation step, an adjustment may be made, such as adjusting the heating rate for heating the sealed vessel and/or holding the sealed vessel at a predetermined temperature for a predetermined time. For example, it is possible to make an adjustment so that the melting peak (high-temperature peak) may appear on the higher-temperature side than the melting peak specific to the resin constituting the obtained expanded beads in the first DSC curve obtained according to the heat-flux differential scanning calorimetry described in JIS K7121-1987.

The expanded beads that exhibit the high-temperature peak are preferable from the viewpoint that a satisfactory expanded beads molded article can be obtained within a wider range of molding conditions. The above-mentioned adjustment for obtaining the high-temperature peak can be performed, for example, as follows. In the above-mentioned dispersion step and/or blowing agent impregnation step, a first-stage holding step of holding the resin beads at a temperature of (the resin melting point of the resin beads - 20°C) or higher and lower than (the resin melting point of the resin beads + 20°C) for about 10 minutes to 60 minutes is performed. Thereafter, the temperature is adjusted to (the resin melting point of the resin beads - 15°C) or higher and lower than (the resin melting point of the resin beads + 15°C). Then, if necessary, a second-stage holding step of further holding the resin beads at that temperature for about 10 minutes to 60 minutes is performed. Next, the expanding step described later is performed, so that expanded beads having the high-temperature peak can be produced. As for the holding of the resin beads at a temperature within the range of (the resin melting point of the resin beads - 15°C) or higher and lower than (the resin melting point of the resin beads + 15°C) for forming the high-temperature peak, it is possible to form the high-temperature peak by setting multi-stage holding temperatures within the temperature range or slowly raising the temperature within the temperature range over a sufficient time.

It is to be noted that the resin melting point of the resin beads is obtained as follows using the resin beads as a test piece: according to the heat-flux differential scanning calorimetry described in JIS K7121-1987, the temperature is raised from 30°C to a temperature 30°C higher than that at the end of the melting peak at a heating rate of 10°C/min, the raised temperature is maintained for 10 minutes and then lowered to 30°C at a cooling rate of 10°C/min, then, the temperature is raised again from 30°C to a temperature 30°C higher than that at the end of the melting peak at a heating rate of 10°C/min to give a second DSC curve, and then, the peak top temperature of the melting peak determined from the second DSC curve is defined as the resin melting point of the resin beads. When two or more melting peaks appear in the second DSC curve, the temperature at the peak top of the melting peak having the largest area is defined as the resin melting point.

(Release step)

After the expandable resin beads are obtained in the above-mentioned blowing agent impregnation step, the release step is performed.

The release step is a step of releasing the resin beads containing the blowing agent (that is, expandable resin beads) from the vessel together with the aqueous medium to expand the resin beads, thereby obtaining expanded beads. More specifically, the expandable resin beads are released together with the aqueous medium under a pressure lower than the internal pressure of the sealed vessel to foam the expandable resin beads.

The expanding step as described above is preferable because expanded beads having a bulk density of $10\,kg/m^3$ or more and $200\,kg/m^3$ or less are easily obtained.

(Second-stage expanding step)

The bulk density of the expanded beads produced as described above can be adjusted, for example, by appropriately changing foaming conditions such as temperature and pressure in the sealed vessel when the contents of the sealed vessel are released in the release step.

When the bulk density of the expanded beads produced by the above-mentioned production method is higher than desired, or when it is desired to provide expanded beads that exhibit a lower bulk density, the following second-stage expanding step can be appropriately performed.

In the second-stage expanding step, first, the expanded beads obtained as described above are stored in a pressurizable sealed vessel, and a gas such as air is injected into the sealed vessel to perform a pressurization treatment, so that the internal pressure of the cells of the expanded beads is increased. Thereafter, the expanded beads are taken out from the sealed vessel and heated with steam or hot air to be further expanded, so that the second-stage expanding step is performed. By performing such a second-stage expanding step, expanded beads (second-stage expanded beads) having a lower bulk density can be obtained.

(Modification of method for producing multilayer resin expanded beads)

In the above-mentioned description, the method of performing co-extrusion in the extrusion step is described in order to produce the multilayer resin expanded beads. However, in the present invention, the method for producing the multilayer resin expanded beads is not limited thereto.

For example, as a different method for producing the multilayer resin expanded beads, a mixture as a core layer-constituting material is obtained by the mixing step, and the mixture is subjected to the extrusion step to prepare single-layer core layer beads formed in a particle shape in advance. Then, the core layer beads are charged into a mixing device having a mixing function and a heating function, so that the surface layer portion of the core layer beads is heated. Next, the covering layer-constituting material for constituting the covering layer is charged into the mixing device or the like, and the heated core layer beads and the covering layer-constituting material are mixed. As a result, multilayer resin beads are obtained, which include a covering layer formed by covering the surface of the core layer beads with the covering layer-constituting material. The multilayer resin beads are subjected to the expanding step to be expanded, whereby the multilayer resin expanded beads are obtained.

[Polypropylene-based resin expanded beads]

The polypropylene-based resin expanded beads produced as described above contain the polypropylene-based resin B that is a recovered product of a post-consumer material of a polypropylene-based resin molded article, and greatly contribute to the solution of environmental problems, such as reduction of carbon dioxide emissions by material recycling and waste product utilization that are required for a recycling-oriented society. In addition, the expanded beads produced according to the present invention can exhibit good moldability equivalent to or better than that of conventional expanded beads produced using only the polypropylene-based resin A that is a non-recovered material, and can provide an expanded beads molded article excellent in appearance and stiffness. Hereinafter, the expanded beads produced by the production method of the present invention are described.

(Bulk density)

The expanded beads produced by the production method of the present invention have a bulk density of $10\,kg/m^3$ or more and $200\,kg/m^3$ or less. From the viewpoint of making the expanded beads capable of providing an expanded beads molded article excellent in mechanical strength, the bulk density is preferably $15\,kg/m^3$ or more, more preferably $20\,kg/m^3$ or more, and still more preferably $25\,kg/m^3$ or more. Meanwhile, from the viewpoint of making the expanded beads capable of providing an expanded beads molded article excellent in lightweight properties and buffering properties, the bulk density is preferably $150\,kg/m^3$ or less, more preferably $100\,kg/m^3$ or less, and still more preferably $80\,kg/m^3$ or less.

The bulk density of the expanded beads is measured by the following method. First, the expanded beads to be subjected to the measurement are left standing for 24 hours or more in an environment of an air temperature of 23°C, a relative humidity of 50%, and 1 atm. An expanded beads group thus obtained and having a weight W (g) is filled in a measuring cylinder, and the bottom surface of the measuring cylinder is lightly tapped against the floor surface several times to stabilize the filling height of the expanded beads group in the measuring cylinder. The bulk volume V (L) of the expanded beads group indicated by the scale of the measuring cylinder is read, and the weight W of the expanded beads group is divided by the bulk volume V of the expanded beads group (that is, W/V). The value obtained as described above is converted into the unit of kg/m$^3$, so that the bulk density (kg/m$^3$) of the expanded beads can be obtained.

(Ash content)

The expanded beads produced by the production method of the present invention may contain, as an ash component, an inorganic substance containing an element such as calcium, sodium, or silicon.
The ash content is measured by the same method as the above-mentioned method for measuring the ash content in the polypropylene-based resin B except that 5 g of the expanded beads were used as a measurement sample.

(Expansion ratio)

The expansion ratio of the expanded beads is determined by dividing the resin density of the polypropylene resin (900 kg/m$^3$) by the above-mentioned bulk density of the expanded beads.

(Measurement of variation rate of expansion ratio)

The polypropylene-based resin expanded beads are precisely weighed in an amount of 300 mL to 500 mL, and sieved with eight types of standard sieves specified in JIS Z8801. The sizes of the meshes of the eight types of standard sieves are 5 mesh, 6 mesh, 7 mesh, 8 mesh, 9 mesh, 12 mesh, 14 mesh, and 16 mesh. Next, the expanded beads remaining on each sieve (remaining expanded beads) are weighed, and the weight fraction $Wi$ of the weight of the remaining expanded beads to the weight of the expanded beads used in the sieving is determined. In addition, the expansion ratio $Ki$ of the expanded beads is determined according to the above-mentioned method.
Then, first, the average expansion ratio $Kav$ is determined from the following formula (1).
[Mathematical formula 1]

$$\text{Average expansion ratio } Kav = \Sigma \ (Ki \times Wi) \quad \cdots \quad (1)$$

Next, the standard deviation $\sigma m$ is determined from the following formula (2).
[Mathematical formula 2]

$$\text{Standard deviation } \sigma m = \sqrt{\Sigma \ \{Wi \times (Kav - Ki)^2\}} \quad \cdots \quad (2)$$

Then, the variation rate of expansion ratio (%) can be determined from the following formula (3).
[Mathematical formula 3]

$$\text{Variation rate of expansion ratio (\%)} = (\sigma m / Kav) \times 100 \cdots (3)$$

In order to confirm that the variation in the expanded bead diameter found by the above-mentioned sieving does not result from the variation in the weight of the expanded beads but results from the variation in the expansion ratio of the expanded beads, the following confirmation may be made.
Specifically, from the produced expanded beads, 500 expanded beads are randomly collected, the weight of each expanded bead is measured to the second decimal place with a precision balance, and the measured values are arithmetically averaged to determine the average weight. Then, the number of expanded beads whose measured value of the weight is within the range of ±10% with respect to the average weight is counted. When the number of expanded beads counted as described above is 95% or more of the 500 expanded beads, it can be determined that the variation in the expanded bead diameter found by sieving results from the variation in the expansion ratio.

(High-temperature peak)

The expanded beads produced by the production method of the present invention are preferably those that can be measured, by heat-flux differential scanning calorimetry, a melting peak specific to the resin and a melting peak on a high-temperature side (that is, a high-temperature peak) that is formed by a thermal history applied until the resin beads are foamed to give expanded beads and is attributable to secondary crystallization of the resin.

That is, the expanded beads produced by the production method of the present invention preferably have a high-temperature peak that is found as follows. First, using the expanded beads as a test piece, a first DSC curve generated when the expanded beads are heated and melted at a heating rate of 10°C/min from 30°C to a heating end temperature 30°C higher than that at the end of the melting peak is obtained according to the heat-flux differential scanning calorimetry described in JIS K7121-1987. In this first DSC curve, two or more melting peaks are observed, and it is confirmed that the two or more melting peaks include a melting peak specific to the resin that constitutes the expanded beads and a melting peak on a high-temperature side (that is, a high-temperature peak), which has a peak top temperature on the higher-temperature side than the peak top temperature of the melting peak specific to the resin. Next, a second DSC curve generated when the expanded beads are held at the heating end temperature for 10 minutes, then cooled to 30°C at a cooling rate of 10°C/min, and heated and melted again at a heating rate of 10°C/min to the heating end temperature 30°C higher than that at the end of the melting peak is obtained. In the DSC curve obtained by heating the expanded beads from 23°C to 200°C at a heating rate of 10°C/min (that is, first heating), then cooling the expanded beads from 200°C to 23°C at a cooling rate of 10°C/min, and then heating the expanded beads from 23°C to 200°C again at a heating rate of 10°C/min (that is, second heating) as described above, only a melting endothermic peak specific to the resin that constitutes the expanded beads is observed. Therefore, it is possible to distinguish the melting peak specific to the resin from the melting peak on the high-temperature side (high-temperature peak) attributable to secondary crystallization of the resin.

The expanded beads as the test piece preferably have a size of about 1 mg to 3 mg. If the expanded beads are larger than 3 mg, the expanded beads may be equally divided and used as a test piece having a size of 1 mg to 3 mg. The expanded beads having a high-temperature peak found as described above are excellent in in-mold moldability, and can improve the mechanical physical properties such as compressive stress of the obtained expanded beads molded article.

The "resin that constitutes the expanded beads" described above refers to the polypropylene resin contained in the polypropylene-based resin A and the polypropylene-based resin B that are contained in the base material resin.

(Heat quantity at high-temperature peak and total heat quantity)

As for a method for measuring the heat quantity at the high-temperature peak found as described above and the total heat quantity of the melting peaks, the measurement method performed in the section of Examples described later is referred to.

(Average cell diameter)

The cell diameter of the expanded beads obtained by the production method of the present invention is not particularly limited. From the viewpoint that an expanded beads molded article that is less likely to suffer from cell breakage and has an excellent appearance is easily provided when producing the expanded beads molded article by molding, the average cell diameter of the expanded beads is preferably 50 $\mu$m or more, more preferably 60 $\mu$m or more, still more preferably 70 $\mu$m or more, and particularly preferably 80 $\mu$m or more. Meanwhile, the average cell diameter of the expanded beads is preferably 300 $\mu$m or less, more preferably 200 $\mu$m or less, and still more preferably 150 $\mu$m or less. For example, the average cell diameter of the expanded beads is preferably 50 $\mu$m or more and 300 $\mu$m or less, more preferably 60 $\mu$m or more and 200 $\mu$m or less, and still more preferably 70 $\mu$m or more and 150 $\mu$m or less.

The average cell diameter of the expanded beads can be determined as follows from an enlarged photograph that is obtained by substantially bisecting an expanded bead and photographing a cut surface of the expanded bead with a microscope. First, in the enlarged photograph of the cut surface of the expanded bead, four lines passing through substantially the center of the cut surface of the expanded bead are drawn from one surface to the other surface of the expanded bead. It is to be noted that the lines are drawn so as to form radial straight lines extending in eight directions at equal intervals from substantially the center of the cut surface of the expanded bead to the surface of the cut bead. Next, the total number N of cells intersecting the four lines is counted. The sum L ($\mu$m) of the lengths of the four lines is determined, and the value obtained by dividing the sum L by the total number N, that is, L/N is defined as the average cell diameter of one expanded bead. This operation is performed on 10 or more expanded beads, and a value obtained by arithmetically averaging the average cell diameters of the expanded beads is defined as the average cell diameter of the expanded beads.

(Closed cell ratio)

The closed cell ratio can be determined using an air-comparison pycnometer according to ASTM-D2856-70.

[Expanded bead molded article]

An expanded beads molded article can be obtained by in-mold molding of the expanded beads obtained by the production method of the present invention. For example, the expanded beads molded article is produced as follows. First, expanded beads are filled in a mold having a cavity corresponding to the shape of the desired expanded beads molded article, and the expanded beads filled in the mold are heated by a heating medium such as steam. The expanded beads in the cavity are further foamed and are fused to each other by heating. As a result, the expanded beads are integrated with each other, and an expanded beads molded article conforming to the shape of the cavity is obtained.

The expanded beads molded article that is produced by molding the expanded beads produced by the production method of the present invention is excellent in appearance as well as in physical properties such as compressive stress at 50% strain.

(Molded article density)

The density of the expanded beads molded article is not particularly limited, but is preferably 100 kg/m$^3$ or less, and more preferably 80 kg/m$^3$ or less from the viewpoint of lightweight properties. Meanwhile, the density of the expanded beads molded article is preferably 10 kg/m$^3$ or more, and more preferably 30 kg/m$^3$ or more from the viewpoint of obtaining a molded article excellent in mechanical physical properties. For example, the density of the expanded beads molded article is preferably 10 kg/m$^3$ or more and 100 kg/m$^3$ or less, and more preferably 30 kg/m$^3$ or more and 80 kg/m$^3$ or less.

The molded article density is determined by measuring the weight of the expanded beads molded article and dividing the weight by the volume of the expanded beads molded article that is determined by the submersion method.

(Compressive stress at 50% strain)

The compressive stress at 50% strain of the expanded beads molded article is not particularly limited, but is preferably 0.50 MPa or more, more preferably 0.52 MPa or more, and still more preferably 0.53 MPa or more from the viewpoint of obtaining an expanded beads molded article excellent in compression properties. Meanwhile, the upper limit of the compressive stress at 50% strain of the expanded beads molded article is about 0.58 MPa or less.

The compressive stress at 50% strain of the expanded beads molded article can be determined by cutting, from the expanded beads molded article (having a length of 250 mm × a width of 200 mm × a thickness of 50 mm), 10 test pieces each having a length of 50 mm × a width of 50 mm × a thickness of 25 mm and without a skin at equal intervals, and performing a compression test at a compression rate of 10 mm/min according to JIS K6767:1999. The test can be performed on, for example, 10 test pieces, and the arithmetic mean value of the obtained values can be used as the compressive stress at 50% strain. The compressive stress at 50% strain is an index of the stiffness of the expanded beads molded article.

Examples

Hereinafter, the present invention is described in detail with reference to examples, but the present invention is not limited thereto. In each of examples and comparative examples performed as follows, the bulk density, ash content, ethylene content ratio, expansion ratio, heat quantity at high-temperature peak, total heat quantity, average cell diameter, closed cell ratio, and variation rate of expansion ratio of the obtained expanded beads were measured. Further, the variation in the expansion ratio of the obtained expanded beads was evaluated. In addition, the molded article density and the compressive stress at 50% strain of the expanded beads molded article that was produced by molding the obtained expanded beads were measured, and the appearance and stiffness of the expanded beads molded article were evaluated. The results of the above-mentioned measurement and evaluation are shown in Tables 2 to 4.

The polypropylene-based resins A and the polypropylene-based resins B shown in Table 1 were used in examples, comparative examples, and reference examples described below. In Table 1, each of the polypropylene-based resins A is a resin material that is a non-recovered material, and each of the polypropylene-based resins B is a recovered product of a post-consumer material of a polypropylene-based resin.

(Ethylene component content of polypropylene-based resin B)

The ethylene component content of the polypropylene-based resin B was determined by a method described in Polymer Analysis Handbook (edited by The Research Committee for Polymer Analysis, the Japan Society for Analytical Chemistry, publication date: January 1995, publisher: Kinokuniya Co., Ltd., page number and item name: 608 to 609 "II. 2.3 2.3.2 Qualitative Methods" and 615 to 618 "II. 2.3 2.3.4 Propylene/Ethylene Copolymer"). That is, the above-mentioned ethylene component content was determined by a method of quantifying the ethylene component content from a relation between, for example, a value obtained by correcting the absorbance of ethylene by a predetermined coefficient and the thickness of a film-shaped test piece. Specifically, first, the polypropylene-based resin B was hot-pressed in an environment at 180°C to be formed into a film, thereby producing a plurality of test pieces having different thicknesses. Next, the absorbances at peaks of 722 cm⁻¹ and 733 cm⁻¹ derived from ethylene (that is, $A_{722}$ and $A_{733}$) were read by measuring the IR spectra of the test pieces. Next, for each test piece, the ethylene component content of the polypropylene-based resin B was calculated using the following formula. The value obtained by arithmetically averaging the ethylene component contents obtained for the test pieces was defined as the ethylene component content (wt%) of the polypropylene-based resin B.

[Mathematical formula 4]

$$(K'_{733})_c = 1/0.96\{(K'_{733})_a - 0.268(K'_{722})_a\} \quad \cdots \quad (4)$$

[Mathematical formula 5]

$$(K'_{722})_c = 1/0.96\{(K'_{722})_a - 0.150(K'_{733})_a\} \quad \cdots \quad (5)$$

[Mathematical formula 6]

$$\text{Ethylene component content (wt\%)} = 0.575\{(K'_{733})_c + (K'_{722})_c\} \quad \cdots \quad (6)$$

In the formulae (4) to (6), $K'_a$ represents an apparent absorption coefficient at each wavelength ($K'_a = A/\rho t$), $K'_c$ represents a corrected absorption coefficient, A represents an absorbance, $\rho$ represents a density (g/cm³) of a resin, and t represents a thickness (cm) of a film-shaped test piece.

(Butene component content of polypropylene-based resin B)

The butene component content of the polypropylene-based resin B was determined by a method described in Polymer Analysis Handbook (edited by The Research Committee for Polymer Analysis, the Japan Society for Analytical Chemistry, publication date: January 1995, publisher: Kinokuniya Co., Ltd., page number and item name: 608 to 609 "II. 2.3 2.3.2 Qualitative Methods" and 618 to 619 "II. 2.3 2.3.5 Propylene/Butene Copolymer"). That is, the above-mentioned butene component content was determined by a method of quantifying the butene component content from a relation between, for example, a value obtained by correcting the absorbance of butene by a predetermined coefficient and the thickness of a film-shaped test piece. A plurality of test pieces having different thicknesses were produced from the polypropylene-based resin in the same manner as in the above-mentioned measurement of the ethylene component content of the polypropylene-based resin. Next, the absorbance at a peak of 766 cm⁻¹ derived from butene (that is, $A_{766}$) was read by measuring the IR spectra of the test pieces. Next, the value obtained by arithmetically averaging the butene component contents obtained for the test pieces using the following formula (7) was defined as the butene component content (wt%) of the polypropylene-based resin.

[Mathematical formula 7]

$$\text{Butene component content (wt\%)} = 12.3(A_{766}/L) \quad \cdots \quad (7)$$

In the formula, $A_{766}$ represents the absorbance of the absorption at 766 cm⁻¹, and L represents the thickness (mm) of the film-shaped test piece.

The melt flow rate of the polypropylene-based resin was measured under the conditions of a test temperature of 230°C and a nominal load of 2.16 kg according to JIS K7210-1:2014.

(Ash content of polypropylene-based resin B)

The ash content was measured as follows using a thermogravimetric analyzer TGA701 manufactured by LECO Corporation according to JIS K6226-2:2003.

The polypropylene-based resin B was precisely weighed in an amount of 5 g and then put in a crucible, a nitrogen stream was introduced into a heating furnace, and the following steps were performed. That is, (1) the heating furnace was heated at a heating rate of 10°C/min from room temperature to 105°C in a nitrogen atmosphere, then (2) the polypropylene-based resin B was held at 105°C until the measured weight reached equilibrium, (3) the heating furnace was heated at a heating rate of 10°C/min from 105°C to 550°C, (4) the polypropylene-based resin B was held at 550°C until the measured weight reached equilibrium, (5) the heating furnace airflow was changed from nitrogen to air and the heating furnace was heated at a heating rate of 10°C/min from 550°C to 950°C, (6) a weight W1 of the combustion residue after the polypropylene-based resin B was held at 950°C for 10 minutes was determined, and (7) the combustion residue was cooled to room temperature. The ash content (wt%) of the polypropylene-based resin B was obtained by dividing the weight W1 of the combustion residue by the weight of the measurement sample (5 g) put in the crucible and multiplying the resulting value by 100. The above-mentioned operation was performed twice, and the arithmetic mean value of the two measurements was defined as the ash content of the polypropylene-based resin B.

The melting point, peak top temperature of the DSC melting peak, and heat of fusion of the polypropylene-based resins A and the polypropylene-based resins B shown in Table 1 were determined by obtaining the second DSC curve as follows. Using the obtained second DSC curve, the extrapolated melting start temperature (Tms), the extrapolated melting end temperature (Tme), and the melting temperature difference, that is, Tme - Tms were determined. The melting peaks observed in the second DSC curve were designated as a DSC melting peak 3, a DSC melting peak 2, and a DSC melting peak 1 from the high-temperature side. That is, when only one melting peak appeared, only the DSC melting peak 3 is shown in Table 1, and when three melting peaks appeared, the DSC melting peak 3, the DSC melting peak 2, and the DSC melting peak 1 are shown in Table 1. Regarding the heat of fusion, when a plurality of DSC melting peaks appeared, total heat of fusion of all the DSC melting peaks is shown in Table 1. In the second DSC curve of the polypropylene-based resin B, it was confirmed whether the peaks of the polypropylene-based resin B were not completely separated. The peaks of the recovered resins 1 to 5 were not completely separated.

According to the heat-flux differential scanning calorimetry of JIS K7121-1987, resin beads made of the polypropylene-based resin A or the polypropylene-based resin B were precisely weighed in an amount of about 5 mg to produce a test piece. The DSC curve generated when the test piece was heated and melted at a heating rate of 10°C/min from 30°C to a temperature 30°C higher than that at the end of the melting peak was defined as the first DSC curve. Next, a DSC curve generated when the test piece was held at the above-mentioned temperature for 10 minutes, then cooled to 30°C at a cooling rate of 10°C/min, and heated and melted again at a heating rate of 10°C/min to the temperature 30°C higher than that at the end of the melting peak was defined as the second DSC curve. The peak top temperature of the peak appeared in the second DSC curve was defined as the DSC melting peak temperature. As the melting point of the resin, the peak top temperature of the peak that was observed in the second DSC curve and that exhibited the largest heat of fusion was employed. The above-mentioned measurement was performed on 10 randomly selected test pieces, and a value obtained by arithmetically averaging the measured values was adopted for the melting peak temperature, melting point of the resin, extrapolated melting start temperature (Tms), and extrapolated melting end temperature (Tme).

The heat of fusion of the polypropylene-based resin A and the polypropylene-based resin B shown in Table 1 was determined by obtaining the second DSC curve as follows. As each of the resins 1 to 6 shown in Table 1, a virgin material made of a polypropylene-based random copolymer was used. As each of the recovered resins 1 and 2, a recovered product of a post-consumer material of a polypropylene-based resin product manufactured by Guolong Plastic Chemical Co., Ltd. was used. As the recovered resin 3, a recovered product of a post-consumer material of a polypropylene-based resin product manufactured by Dongguan Pengyi Plastic Raw Materials was used. As the recovered resin 4, a commercially available product (product name: rPP CPP0500RP) sold as a recovered product of a post-consumer material of a polypropylene-based resin product manufactured by REEF Technology Co., Ltd. was used. As the recovered resin 5, a recovered product of a post-consumer material of a polypropylene-based resin product prepared by recovering, pulverizing, washing, melting, and granulating a used polypropylene-based resin molded article was used.

According to the heat-flux differential scanning calorimetry of JIS K7122-1987, resin beads made of the polypropylene-based resin A or the polypropylene-based resin B were precisely weighed in an amount of about 5 mg to produce a test piece. The DSC curve generated when the test piece was heated and melted at a heating rate of 10°C/min from 30°C to a temperature 30°C higher than that at the end of the melting peak was defined as the first DSC curve. Next, a DSC curve generated when the test piece was held at the above-mentioned temperature for 10 minutes, then cooled to 30°C at a cooling rate of 10°C/min, and heated and melted again at a heating rate of 10°C/min to the temperature 30°C higher than that at the end of the melting peak was defined as the second DSC curve. The peak top temperature of the peak appeared in the second DSC curve was defined as a DSC melting peak temperature, and the heat of fusion (J/g) was determined from the area of the peak. The measurement was performed on 10 randomly selected test pieces, and a value obtained by arithmetically averaging the measured values was adopted as the heat of fusion.

(Example 1)

Preparation of resin beads:

The resin 1 shown in Table 1 was used as the polypropylene-based resin A, and the recovered resin 1 shown in Table 1 was used as the polypropylene-based resin B. These resins were blended at the rates shown in Table 2 and melt-kneaded in an extruder to prepare a mixture, and the mixture was used as a base material resin. During the melt-kneading, in addition to these materials, zinc borate ("Fire Break ZB" manufactured by Borax) was used as a cell controlling agent. The zinc borate was added in an amount of 0.05 wt% in 100 wt% of the melt-kneaded product (the total of the resin 1, the recovered resin 1, and zinc borate). The base material resin in a molten state was extruded into a strand shape from a die provided in an extruder, cooled in water, and then cut with a pelletizer to give circular cylindrical resin beads having an average weight of 1.0 mg per piece.

Preparation of expanded beads:

Into a sealed vessel having a volume of 400 L, 100 kg of the obtained resin beads and 220 L of water as an aqueous medium were supplied. In addition, with respect to 100 parts by weight of the resin beads, 0.3 parts by weight of kaolin as an inorganic dispersant, and 0.004 parts by weight (in terms of active ingredient) of sodium alkylbenzene sulfonate and 0.001 parts by weight of aluminum sulfate as dispersion auxiliary agents were individually added into the sealed vessel.

Next, carbon dioxide as a blowing agent was injected into the sealed vessel and pressurized until the gauge pressure reached 1.8 MPa (G). Note that the pressure denoted by (G) is a gauge pressure, that is, a pressure value on the basis of the atmospheric pressure. Thereafter, the contents of the sealed vessel were heated to a foaming temperature (150.5°C) at a heating rate of 2°C/min with stirring, carbon dioxide was further injected so that a predetermined foaming pressure (2.6 MPa (G)) might be achieved, and the sealed vessel was held at the same temperature for 15 minutes. In this manner, an adjustment was made so that a high-temperature peak might appear in an endothermic curve that was generated by the first DSC measurement of the obtained expanded beads.

Thereafter, the contents of the sealed vessel (that is, resin beads and water) were released under atmospheric pressure to give expanded beads (first-stage expanded beads) having a bulk density of 49.8 kg/m$^3$.

(Examples 2, 3, and 5 to 9)

Expanded beads and expanded beads molded articles were produced in the same manner as in Example 1 except that the resin materials used and the blending rates were changed to the contents shown in Table 2, and that the foaming temperature and the foaming pressure were adjusted so that the bulk densities and the heat quantities at high-temperature peak shown in the table might be obtained, and the products were defined as Examples 2, 3, and 5 to 9.

(Example 4)

Expanded beads and an expanded beads molded article were produced in the same manner as in Example 1 except that resin beads having a multilayer structure were produced and used as described below, and that the foaming temperature and the foaming pressure were adjusted so that the bulk density and the heat quantity at high-temperature peak shown in the table might be obtained, and the products were defined as Example 4.

Preparation of resin beads:

A production apparatus was provided that included a core layer-forming extruder having an inner diameter of 50 mm, a multilayer strand-forming die attached to the downstream side of the core layer-forming extruder, and a covering layer-forming extruder having an inner diameter of 30 mm. In the production apparatus, the downstream side of the covering layer-forming extruder is connected to the multilayer strand-forming die, and the melt-kneaded products for forming individual layers can be laminated in the die and co-extruded.

As the core layer-forming material that constitutes the core layer, the resin 1 and the recovered material 1 shown in Table 1 were used at the blending rates shown in Table 2. The core layer-forming material was supplied to the core layer-forming extruder and melt-kneaded. In addition, together with these materials, zinc borate ("Fire Break ZB" manufactured by Borax) as a cell controlling agent was added in an amount of 0.05 wt% in 100 wt% of the melt-kneaded product (the total of the resin 1, the recovered resin 1, and zinc borate).

As the covering layer-forming material that constitutes the covering layer, the resin 4 shown in Table 1 was used at the blending rate shown in Table 2, and the resin was supplied to the covering layer-forming extruder and melt-kneaded.

The mixtures for forming individual layers obtained by melt-kneading as described above were introduced into the multilayer strand-forming die and joined in the die, and a multilayer strand having a two-layer structure (covering layer/core layer structure) was extruded from a pore of a mouthpiece attached to the downstream side of the die. The extruded strand was cooled with water and cut with a pelletizer to give circular cylindrical resin beads having an average weight of 1.0 mg per piece.

(Example 10)

Expanded beads and an expanded beads molded article were produced in the same manner as in Example 1 except that expanded beads were produced in the same manner as in Example 1 as shown in Table 4, and that second-stage foaming was performed as follows using the expanded beads (first-stage expanded beads), and the products were defined as Example 10.

Second-stage foaming:

First-stage expanded beads obtained in the same manner as in Example 1 were left standing in an environment of an air temperature of 23°C, a relative humidity of 50%, and 1 atm for 24 hours for curing. Then, the first-stage expanded beads after curing were placed in a pressurizable sealed vessel, and the pressure in the sealed vessel was increased from normal pressure to pressurize the expanded beads. The pressurized state of the expanded beads was maintained for a predetermined time to impregnate air into cells of the expanded beads. Thereafter, the first-stage expanded beads taken out from the sealed vessel, and the first-stage expanded beads having cells having an internal pressure of 0.7 MPa (G). Thereafter, the first-stage expanded beads were supplied to a second-stage foaming apparatus. Steam was supplied into the apparatus to foam the first-stage expanded beads, thereby obtaining expanded beads having a bulk density of 26.6 kg/m$^3$.

(Comparative Examples 1 to 6)

Expanded beads and expanded beads molded articles were produced in the same manner as in Example 1 except that the resin materials used and the blending rates were changed to the contents shown in Table 3, and that the foaming temperature and the foaming pressure were adjusted so that the bulk densities and the heat quantities at high-temperature peak shown in the table might be obtained, and the products were defined as Comparative Examples 1 to 6.

(Reference Example 1)

Expanded beads and an expanded beads molded article were produced in the same manner as in Example 1 except that a base material resin containing only the resin 1 and containing no recovered material was used as a constituent resin, and that the foaming temperature and the foaming pressure were adjusted so that the bulk density and the heat quantity at high-temperature peak shown in the table might be obtained, and the products were defined as Reference Example 1. Reference Example 1 is an example of conventional polypropylene-based resin expanded beads containing no recovered resin.

(Reference Example 2)

Expanded beads and an expanded beads molded article were produced in the same manner as in Example 1 except that a base material resin prepared by blending the resin 1 and the resin 6, which are non-recovered resins, at the rates shown in Table 3 was used as a constituent resin, and that the foaming temperature and the foaming pressure were adjusted so that the bulk density and the heat quantity at high-temperature peak shown in the table might be obtained, and the products were defined as Reference Example 2. Reference Example 2 is an example of conventional polypropylene-based resin expanded beads containing no recovered resin.

(Reference Example 3)

Expanded beads and an expanded beads molded article were produced in the same manner as in Reference Example 1 except that second-stage foaming was performed using the obtained expanded beads in the same manner as in Example 10 as shown in Table 4, and the products were defined as Reference Example 3.

(Ash content of expanded beads)

Method for measuring ash content:

The ash content was measured as follows using a thermogravimetric analyzer TGA701 manufactured by LECO Corporation according to JIS K6226-2:2003.

The expanded beads obtained as described above were precisely weighed in an amount of 5 g and then put in a crucible, a nitrogen stream was introduced into a heating furnace, and the following steps were performed. That is, (1) the heating furnace was heated at a heating rate of 10°C/min from room temperature to 105°C in a nitrogen atmosphere, then (2) the expanded beads were held at 105°C until the measured weight reached equilibrium, (3) the heating furnace was heated at a heating rate of 10°C/min from 105°C to 550°C, (4) the expanded beads were held at 550°C until the measured weight reached equilibrium, (5) the heating furnace airflow was changed from nitrogen to air and the heating furnace was heated at a heating rate of 10°C/min from 550°C to 950°C, (6) a weight W1 of the combustion residue after the expanded beads were held at 950°C for 10 minutes was determined, and (7) the combustion residue was cooled to room temperature. The ash content (wt%) of the expanded beads was obtained by dividing the weight W1 of the combustion residue by the weight of the measurement sample (5 g) put in the crucible and multiplying the resulting value by 100. The above-mentioned operation was performed twice, and the arithmetic mean value of the two measurements was defined as the ash content of the expanded beads.

(Ethylene component content of expanded beads)

The ethylene component content of the expanded beads was determined in the same manner as in the case of the ethylene component content of the polypropylene-based resin except that the expanded beads were used as a test piece.

(Heat quantity at high-temperature peak and total heat quantity of expanded beads)

Expanded beads were precisely weighed in an amount of about 1 mg to give a test piece. The test piece was heated and melted according to the heat-flux differential scanning calorimetry described in JIS K7122-1987, and a DSC curve at that time was obtained. The measurement temperature range was set to a range of 30°C to a temperature 30°C higher than that at the end of the melting peak of the test piece, the heating rate during heating was set to 10°C/min, and a first DCS curve was obtained.

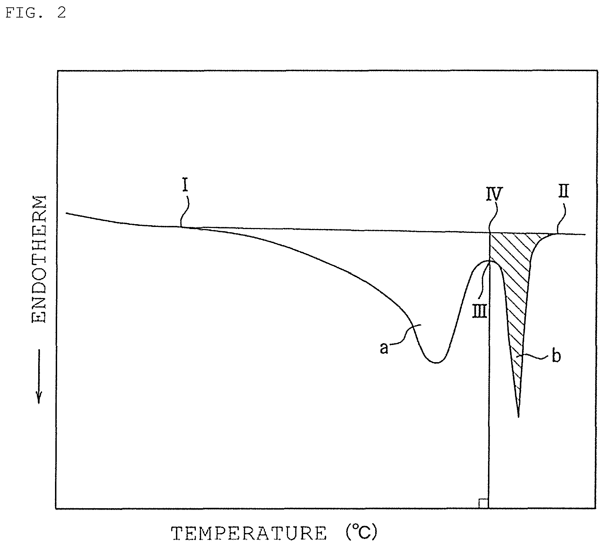

The first DSC curve thus obtained is shown in Fig. 2. In the DSC curve, a straight line connecting a point I corresponding to 80°C on the DSC curve and a point II corresponding to the melting end temperature of the expanded beads was drawn. The melting end temperature is an end point on the high-temperature side of a high-temperature peak (b), and is an intersection between the high-temperature peak (b) and a baseline on the higher-temperature side than the high-temperature peak (b) in the DSC curve.

As shown in Fig. 2, a straight line connecting the point I and the point II was drawn, and then an intersection between a straight line that passes through a maximum point III existing between a melting peak (a) specific to the resin and the high-temperature peak (b) and that is parallel to the vertical axis of the graph, and the straight line connecting the point I and the point II was defined as IV.

Then, the area of a portion surrounded by a straight line connecting the point I and the point IV, a straight line connecting the point III and the point IV, and a DSC curve connecting the point I and the point III was defined as the area of the melting peak (a) specific to the resin. The area of a portion (that is, a hatched portion) surrounded by a straight line connecting the point IV and the point II, a straight line connecting the point III and the point IV, and a DSC curve connecting the point III and the point II was defined as the area of the high-temperature peak (b), and the area was defined as the heat quantity at high-temperature peak (J/g) of the expanded beads. In addition, the sum of the area of the melting peak (a) specific to the resin and the area of the high-temperature peak (b) was defined as the total heat quantity (J/g).

After the first DSC curve was obtained as described above, the expanded beads were held at the heating end temperature for 10 minutes, then cooled to 30°C at a cooling rate of 10°C/min, and heated and melted again at a heating rate of 10°C/min to the heating end temperature 30°C higher than that at the end of the melting peak to give a second DSC curve. It was confirmed that no high-temperature peak appeared in the second DSC curve.

(Average cell diameter of expanded beads)

A cut surface obtained by substantially bisecting an expanded bead was photographed with a microscope to give an enlarged photograph of the cut surface. In the enlarged photograph of the cut surface, four lines passing through substantially the center of the cut surface of the expanded bead were drawn from one surface to the other surface of the expanded bead. It is to be noted that the lines were drawn so as to form radial straight lines extending in eight directions at equal intervals from substantially the center of the cut surface of the expanded bead to the surface of the cut bead. Next, the total number N of cells intersecting the four lines was counted. The sum L ($\mu$m) of the lengths of the four lines was determined, and the value obtained by dividing the sum L by the total number N, that is, L/N was defined as the average cell diameter of one expanded bead. This operation was performed on 10 or more expanded beads, and a value obtained by arithmetically averaging the average cell diameters of the expanded beads was defined as the average cell diameter of the expanded beads.

(Closed cell ratio of expanded beads)

The closed cell ratio (%) of the expanded beads was determined using an air-comparison pycnometer according to ASTM-D2856-70.

(Bulk density of expanded beads)

The bulk density of the expanded beads was measured as follows. An expanded beads group was left standing for 24 hours in an environment of an air temperature of 23°C, a relative humidity of 50%, and 1 atm. The expanded beads group thus obtained was filled into a measuring cylinder so as to be naturally deposited, and the bulk volume (unit: L) of the expanded beads group was read from the scale of the measuring cylinder. Then, the mass (unit: g) of the expanded beads group in the measuring cylinder was divided by the above-mentioned bulk volume (unit: L), and the obtained value was converted into the unit of kg/m$^3$, so that the bulk density (unit: kg/m$^3$) of the expanded beads was obtained.

(Expansion ratio of expanded beads)

The expansion ratio of the expanded beads was determined by dividing the resin density of the polypropylene resin (0.9 kg/m$^3$) by the above-mentioned bulk density of the expanded beads.

(Variation rate of expansion ratio of expanded beads)

The expanded beads were precisely weighed in an amount of 300 mL to 500 mL, and sieved with eight types of standard sieves specified in JIS Z8801. The sizes of the meshes of the eight types of standard sieves are 5 mesh, 6 mesh, 7 mesh, 8 mesh, 9 mesh, 12 mesh, 14 mesh, and 16 mesh. Next, the expanded beads remaining on each sieve (remaining expanded beads) were weighed, and the weight fraction $W_i$ of the weight of the remaining expanded beads to the weight of the expanded beads used in the sieving was determined. In addition, the expansion ratio $K_i$ of the expanded beads was determined according to the above-mentioned method.

Then, first, the average expansion ratio Kav was determined from the following formula (1).

[Mathematical formula 8]

$$\text{Average expansion ratio } K_{av} = \Sigma\ (K_i \times W_i) \quad \cdots \quad (1)$$

Next, the standard deviation $\sigma m$ was determined from the following formula (2).

[Mathematical formula 9]

$$\text{Standard deviation } \sigma m = \sqrt{\Sigma\ \{W_i \times (K_{av} - K_i)^2\}} \quad \cdots \quad (2)$$

Then, the variation rate of expansion ratio (%) was determined from the following formula (3).

[Mathematical formula 10]

$$\text{Variation rate of expansion ratio } (\%) = (\sigma m / K_{av}) \times 100 \cdots (3)$$

In order to confirm that the variation in the expanded bead diameter found by the above-mentioned sieving does not result from the variation in the weight of the expanded beads but results from the variation in the expansion ratio of the expanded beads, the following confirmation was made.

From the produced expanded beads, 500 expanded beads were randomly collected, the weight of each expanded bead was measured to the second decimal place with a precision balance, and the measured values were arithmetically averaged to determine the average weight. Then, the number of expanded beads whose measured value of the weight was within the range of $\pm$10% with respect to the average weight was counted. In all of examples, comparative examples, and reference examples, the number of the counted expanded beads was 95% or more of the 500 expanded beads.

(Evaluation of appearance of expanded beads molded article)

<Appearance>

As for the evaluation of the surface appearance of the expanded beads molded article, a 100 mm × 100 mm rectangle was drawn in the central portion of the expanded beads molded article, diagonal lines were drawn from the corners of the rectangular area, the number of voids (gaps) having a size of 1 mm × 1 mm or more on the lines was counted, and the degree of voids (gaps) between the expanded beads was evaluated as follows.

A (◎: very good): The number of voids was less than 5.
B (○: good): The number of voids was 5 or more and less than 10.
C (△: slightly poor): The number of voids was 10 or more and less than 15.
D (×: poor): The number of voids was 15 or more.

(Molded article density of expanded beads molded article)

The molded article density of the expanded beads molded article was determined by measuring the weight of the expanded beads molded article and dividing the weight by the volume of the expanded beads molded article that was determined by the submersion method.

(Compressive stress at 50% strain of expanded beads molded article)

From an expanded beads molded article (having a length of 250 mm × a width of 200 mm × a thickness of 50 mm), 10 test pieces each having a length of 50 mm × a width of 50 mm × a thickness of 25 mm without a skin were cut out at equal intervals. Using the test pieces, a compression test was performed at a compression rate of 10 mm/min according to JIS K6767:1999 to determine the compressive stress at 50% strain of the expanded beads molded article. The arithmetic mean value of the values of the 10 test pieces was defined as the compressive stress at 50% strain.

(Evaluation of stiffness of expanded beads molded article)

The compressive stress at 50% strain was evaluated for each density according to the following criteria.
Molded article density 60 kg/m$^3$:

A: The compressive stress at 50% strain is 0.54 MPa or more
B: The compressive stress at 50% strain is 0.52 MPa or more and less than 0.54 MPa
C: The compressive stress at 50% strain is less than 0.52 MPa

Molded article density 30 kg/m$^3$:

A: The compressive stress at 50% strain is 0.25 MPa or more
B: The compressive stress at 50% strain is 0.23 MPa or more and less than 0.25 MPa
C: The compressive stress at 50% strain is less than 0.23 MPa

[Table 1]

Table 1

| | | Composition | | Melting point (*1) | DSC melting peak 1 | | DSC melting peak 2 | | DSC melting peak 3 | | Extrapolated melting start temperature Tms | Extrapolated melting end temperature Tme | Melting temperature difference Tme - Tms | Heat of fusion | MFR | Ash content |
|---|---|---|---|---|---|---|---|---|---|---|---|---|---|---|---|---|
| | | Ethylene content | Butene content | | Peak top temperature | Heat of fusion | Peak top temperature | Heat of fusion | Peak top temperature | Heat of fusion | | | | | | |
| | | wt% | wt% | °C | °C | J/g | °C | J/g | °C | J/g | °C | °C | °C | J/g | g/10 min (230°C) | wt% |
| PPA (*2) | Resin 1 | 0.9 | 9.6 | 141 | -- | -- | -- | -- | 141 | 70 | 131 | 149 | 17 | 70 | 8 | -- |
| | Resin 2 | 2.1 | 0.0 | 147 | -- | -- | -- | -- | 147 | 84 | 142 | 152 | 10 | 84 | 8 | -- |
| | Resin 3 | 3.1 | 4.2 | 133 | -- | -- | -- | -- | 133 | 59 | 122 | 142 | 20 | 59 | 7 | -- |
| | Resin 4 | 6.2 | 9.8 | 128 | -- | -- | 128 | 37 | 132 | 13 | 90 | 141 | 51 | 51 | 7 | -- |
| | Resin 5 | 1.4 | 0 | 154 | -- | -- | -- | -- | 154 | 88 | 148 | 156 | 8 | 88 | 7 | -- |
| | Resin 6 | 0.7 | 6.0 | 153 | -- | -- | 129 | | 153 | | 117 | 158 | 41 | 85 | 8 | -- |
| PPB (*3) | Recovered resin 1 | 0.7 | 6.2 | 153 | -- | -- | 129 | 45 | 153 | 39 | 117 | 158 | 41 | 84 | 10 | 0.06 |
| | Recovered resin 2 | 0.7 | 6.2 | 153 | -- | -- | 129 | 45 | 153 | 39 | 117 | 158 | 41 | 84 | 10 | 0.55 |
| | Recovered resin 3 | 0 | 0 | 165 | -- | -- | 127 | 16 | 165 | 70 | 122 | 168 | 46 | 86 | 12 | 6.00 |
| | Recovered resin 4 | 2.2 | 0.2 | 164 | 107 | 6 | 125 | 10 | 164 | 70 | 84 | 168 | 84 | 86 | 4 | 0.23 |
| | Recovered resin 5 | 1.4 | 0 | 154 | -- | -- | -- | -- | 154 | 88 | 148 | 156 | 8 | 88 | 8 | 0.15 |

(*1) Peak top temperature of the peak exhibiting the largest heat of fusion in the second DSC curve

(*2) Polypropylene-based resin A

(*3) Polypropylene-based resin B

Table 2

| | | | | Example 1 | Example 2 | Example 3 | Example 4 | Example 5 | Example 6 | Example 7 | Example 8 | Example 9 |
|---|---|---|---|---|---|---|---|---|---|---|---|---|
| Resin beads | PP resin A | Resin | -- | Resin 1 | Resin 1 | Resin 1 | Resin 1 | Resin 1 | Resin 1 | Resin 3 | Resin 1 | Resin 1 |
| | | Rate | wt% | 75 | 50 | 85 | 71 | 75 | 75 | 75 | 95 | 40 |
| | | Melting point | °C | 141 | 141 | 141 | 141 | 141 | 141 | 133 | 141 | 141 |
| | PP resin B | Resin | -- | Recovered resin 1 | Recovered resin 1 | Recovered resin 1 | Recovered resin 1 | Recovered resin 4 | Recovered resin 2 | Recovered resin 1 | Recovered resin 1 | Recovered resin 1 |
| | | Rate | wt% | 25 | 50 | 15 | 24 | 25 | 25 | 25 | 5 | 60 |
| | | Melting point | °C | 153 | 153 | 153 | 153 | 164 | 153 | 153 | 153 | 153 |
| | | Melting temperature difference Tme - Tms | °C | 41 | 41 | 41 | 41 | 84 | 41 | 41 | 41 | 41 |
| | | Ash content | wt% | 0.06 | 0.06 | 0.06 | 0.06 | 0.23 | 0.55 | 0.06 | 0.06 | 0.06 |
| | Covering layer resin | Resin | -- | -- | -- | -- | Resin 4 | -- | -- | -- | -- | -- |
| | | Rate | -- | -- | -- | -- | 5 | -- | -- | -- | -- | -- |
| | | Melting point | -- | -- | -- | -- | 128 | -- | -- | -- | -- | -- |
| | Melting point difference (B - A) | | -- | 12 | 12 | 12 | 12 | 23 | 12 | 20 | 12 | 12 |
| | Heat of fusion of PP resin B having extrapolated melting start temperature equal to or lower than extrapolated melting start temperature of PP resin A | | J/g | 33 | 33 | 33 | 33 | 18 | 33 | 17 | 33 | 33 |
| | Expanding nucleating agent | | wt% | 0.05 | 0.05 | 0.05 | 0.05 | 0.05 | 0.05 | 0.05 | 0.05 | 0.05 |
| Expanded beads | Ash content | | wt% | 0.07 | 0.08 | 0.06 | 0.06 | 0.11 | 0.19 | 0.07 | 0.05 | 0.09 |
| | Ethylene content | | wt% | 0.9 | 0.8 | 0.9 | 1.1 | 1.2 | 0.9 | 2.5 | 0.9 | 0.8 |
| | Heat quantity at high-temperature peak | | J/g | 14.1 | 14.3 | 14 | 14.2 | 15.0 | 14.5 | 12.5 | 14.0 | 14.5 |
| | Total heat quantity | | J/g | 70.6 | 68 | 70 | 71 | 80 | 71 | 67 | 68 | 68 |
| | Average cell diameter | | μm | 90 | 87 | 88 | 91 | 50 | 80 | 100 | 85 | 90 |
| | Closed cell ratio | | % | 95 | 94 | 96 | 94 | 93 | 93 | 92 | 96 | 95 |
| | Bulk density | | kg/m³ | 49.7 | 48.6 | 48.9 | 49.7 | 50.8 | 48.6 | 50.0 | 47.4 | 48.4 |
| | Expansion ratio | | times | 18.1 | 18.5 | 18.4 | 18.1 | 17.7 | 18.5 | 18.0 | 19.0 | 18.6 |
| | Variation rate of expansion ratio | | % | 7.7 | 10.4 | 8.8 | 6.7 | 13.0 | 16.3 | 7.8 | 9.5 | 15.0 |
| | Evaluation of variation in expansion ratio | | - | A | A | A | A | B | B | A | A | B |
| Expanded beads molded article | Evaluation of appearance | | - | A | A | A | A | B | B | B | A | B |
| | Molded article density | | kg/m³ | 60 | 60 | 60 | 60 | 60 | 60 | 60 | 60 | 60 |
| | Evaluation of stiffness | | - | A | A | A | A | B | B | C | C | C |
| | Compressive stress at 50% strain | | MPa | 0.55 | 0.55 | 0.54 | 0.53 | 0.53 | 0.53 | 0.51 | 0.51 | 0.51 |

[Table 2]

EP 4 588 967 A1

28

Table 3

| | | | | Comparative Example 1 | Comparative Example 2 | Comparative Example 3 | Comparative Example 4 | Comparative Example 5 | Comparative Example 6 | Reference Example 1 | Reference Example 2 |
|---|---|---|---|---|---|---|---|---|---|---|---|
| Resin beads | PP resin A | Resin | -- | Resin 1 | Resin 2 | Resin 5 | Resin 2 | Resin 3 | Resin 1 | Resin 1 | Resin 1 |
| | | Rate | wt% | 25 | 75 | 75 | 75 | 75 | 75 | 100 | 75 |
| | | Melting point | °C | 141 | 147 | 154 | 147 | 133 | 141 | 141 | 141 |
| | PP resin B | Resin | -- | Recovered resin 1 | Recovered resin 1 | Recovered resin 1 | Recovered resin 3 | Recovered resin 4 | Recovered resin 5 | -- | Resin 6 |
| | | Rate | wt% | 75 | 25 | 25 | 25 | 25 | 25 | -- | 25 |
| | | Melting point | °C | 153 | 153 | 153 | 165 | 164 | 154 | -- | 153 |
| | | Melting temperature difference $T_{me} - T_{ms}$ | °C | 41 | 41 | 41 | 46 | 84 | 8 | -- | 41 |
| | | Ash content | wt% | 0.06 | 0.06 | 0.06 | 6.0 | 0.23 | -- | -- | -- |
| | Covering layer resin | Resin | -- | -- | -- | -- | -- | -- | -- | -- | -- |
| | | Rate | -- | -- | -- | -- | -- | -- | -- | -- | -- |
| | | Melting point | -- | -- | -- | -- | -- | -- | -- | -- | -- |
| | Melting point difference (B - A) | | -- | 12 | 6 | -1 | 18 | 31 | 13 | -- | 12 |
| | Heat of fusion of PP resin B having extrapolated melting start temperature equal to or lower than extrapolated melting start temperature of PP resin A | | J/g | 33 | 50 | 61 | 24 | 11 | 19 | -- | 33 |
| | Expanding nucleating agent | | wt% | 0.05 | 0.05 | 0.05 | 0.05 | 0.05 | 0.05 | 0.05 | 0.05 |
| Expanded beads | | Ash content | wt% | 0.10 | 0.07 | 0.07 | 1.55 | 0.11 | 0.05 | 0.05 | 0.05 |
| | | Ethylene content | wt% | 0.8 | 1.8 | 1.2 | 1.6 | 2.9 | 1.0 | 0.9 | 0.7 |
| | | Heat quantity at high-temperature peak | J/g | 14.5 | 23 | 15 | 22.8 | 13.2 | 14.2 | 14.1 | 14.0 |
| | | Total heat quantity | J/g | 71 | 78 | | 81 | 68 | 71 | 67.5 | 71 |
| | | Average cell diameter | μm | 92 | 100 | 90 | 55 | 110 | 95 | 85 | 95 |
| | | Closed cell ratio | % | 75 | 93 | 94 | 83 | 85 | 92 | 95 | 94 |
| | | Bulk density | kg/m³ | 46.6 | 52.3 | 63.4 | 50.8 | 48.4 | 49.5 | 51.7 | 49.5 |
| | | Expansion ratio | times | 19.3 | 17.2 | 14.2 | 17.7 | 18.6 | 18.2 | 17.4 | 18.2 |
| | | Variation rate of expansion ratio | % | 23.8 | 25.3 | 33.0 | 13.0 | 13.3 | 8.7 | 9.3 | 8.7 |
| | | Evaluation of variation in expansion ratio | - | C | C | D | B | B | A | A | A |
| Expanded beads molded article | | Evaluation of appearance | - | -- | C | C | D | -- | C | A | A |
| | | Molded article density | kg/m³ | -- | 60 | 60 | 60 | -- | 60 | 60 | 60 |
| | | Evaluation of stiffness | - | -- | A | B | C | -- | A | C | B |
| | | Compressive stress at 50% strain | MPa | -- | 0.54 | 0.53 | 0.45 | -- | 0.54 | 0.51 | 0.51 |

[Table 3]

EP 4 588 967 A1

29

[Table 4]

Table 4

| | | | | Example 10 | Reference Example 3 |
|---|---|---|---|---|---|
| Resin beads | PP resin A | Resin | -- | Resin 1 | Resin 1 |
| | | Rate | wt% | 75 | 100 |
| | | Melting point | °C | 141 | 141 |
| | PP resin B | Resin | -- | Recovered resin 1 | -- |
| | | Rate | wt% | 25 | -- |
| | | Melting point | °C | 153 | -- |
| | | Melting temperature difference Tme - Tms | °C | 41 | -- |
| | | Ash content | wt% | 0.06 | -- |
| | Covering layer resin | Resin | -- | -- | -- |
| | | Rate | -- | -- | -- |
| | | Melting point | -- | -- | -- |
| | Melting point difference (B - A) | | -- | 12 | -- |
| | Heat of fusion of PP resin B having extrapolated melting start temperature equal to or lower than extrapolated melting start temperature of PP resin A | | J/g | 33 | -- |
| | Expanding nucleating agent | | wt% | 0.05 | 0.05 |
| Expanded beads | Ash content | | wt% | 0.07 | 0.05 |
| | Ethylene content | | wt% | 0.9 | 0.9 |
| | Heat quantity at high-temperature peak | | J/g | 14.1 | 14.1 |
| | Total heat quantity | | J/g | 70.6 | 68 |
| | Average cell diameter | | $\mu$m | 106 | 110 |
| | Closed cell ratio | | % | 95 | 95 |
| | Bulk density | | kg/m$^3$ | 26.6 | 26.5 |
| | Expansion ratio | | times | 33.8 | 33.9 |
| | Variation rate of expansion ratio | | % | 13.4 | 11.5 |
| | Evaluation of variation in expansion ratio | | - | B | B |
| Expanded beads molded article | Evaluation of appearance | | - | A | B |
| | Molded article density | | kg/m$^3$ | 30 | 30 |
| | Evaluation of stiffness | | - | A | C |
| | Compressive stress at 50% strain | | MPa | 0.25 | 0.22 |

The present invention described above includes the following technical ideas.

(1) A method for producing polypropylene-based resin expanded beads having a bulk density of 10 kg/m$^3$ or more and 200 kg/m$^3$ or less, the method including: impregnating polypropylene-based resin beads dispersed in an aqueous medium in a sealed vessel with a blowing agent, and releasing the polypropylene-based resin beads containing the blowing agent from the sealed vessel together with the aqueous medium under a pressure lower than in the sealed vessel to foam the polypropylene-based resin beads, wherein:

the polypropylene-based resin beads contain, as a base material resin, a mixture of a polypropylene-based resin A having a melting point of 130°C or higher and 155°C or lower and a polypropylene-based resin B,
in the mixture, a blending rate of the polypropylene-based resin A is 40 wt% or more and 97 wt% or less, and a blending rate of the polypropylene-based resin B is 3 wt% or more and 60 wt% or less (a total of the polypropylene-based resin A and the polypropylene-based resin B is 100 wt%),
a melting point difference between the polypropylene-based resin A and the polypropylene-based resin B (a melting point of the polypropylene-based resin B - a melting point of the polypropylene-based resin A) is 10°C or more and 30°C or less,
the polypropylene-based resin B is a recovered product of a post-consumer material,
the polypropylene-based resin B has an ash content of 5 wt% or less with respect to 100 wt% of the polypropylene-based resin B, and
in a melting peak observed in a DSC curve in heat-flux differential scanning calorimetry of the polypropylene-based resin B, a difference between an extrapolated melting start temperature (Tms) and an extrapolated melting end temperature (Tme) of the melting peak, that is, Tme - Tms is 30°C or more.

(2) The production method according to the item (1), wherein in the mixture, the blending rate of the polypropylene-based resin A is more than 50 wt% and 80 wt% or less, and the blending rate of the polypropylene-based resin B is 20 wt% or more and less than 50 wt% (the total of the polypropylene-based resin A and the polypropylene-based resin B is 100 wt%).

(3) The production method according to the item (1) or (2), wherein the difference between the extrapolated melting start temperature (Tms) and the extrapolated melting end temperature (Tme) of the melting peak, that is, Tme - Tms is 30°C or more and 100°C or less.

(4) The production method according to any one of the items (1) to (3), wherein the melting point difference between the polypropylene-based resin A and the polypropylene-based resin B (the melting point of the polypropylene-based resin B - the melting point of the polypropylene-based resin A) is 10°C or more and 20°C or less.

(5) The production method according to any one of the items (1) to (4), wherein the ash content of the polypropylene-based resin is 0.5 wt% or less with respect to 100 wt% of the polypropylene-based resin B.

Reference Signs List

10 Straight line obtained by extending baseline on low-temperature side to high-temperature side

20 Tangent line drawn at point where gradient is maximum on curve on lowest-temperature side of melting peak

30 Intersection between straight line 10 and tangent line 20

40 First inflection point

50 Straight line obtained by extending baseline on high-temperature side to low-temperature side

60 Tangent line drawn at point where gradient is maximum on curve on highest-temperature side of melting peak

70 Intersection between straight line 50 and tangent line 60

80 High-temperature side inflection point

100 Second DSC curve of polypropylene-based resin B

200 DDSC curve that is differential curve of DSC curve 100

**Claims**

1. A method for producing polypropylene-based resin expanded beads having a bulk density of 10 kg/m$^3$ or more and 200 kg/m$^3$ or less, the method comprising: impregnating polypropylene-based resin beads dispersed in an aqueous medium in a sealed vessel with a blowing agent, and releasing the polypropylene-based resin beads containing the blowing agent from the sealed vessel together with the aqueous medium under a pressure lower than in the sealed vessel to foam the polypropylene-based resin beads, wherein:

   the polypropylene-based resin beads contain, as a base material resin, a mixture of a polypropylene-based resin A having a melting point of 130°C or higher and 155°C or lower and a polypropylene-based resin B, in the mixture, a blending rate of the polypropylene-based resin A is 40 wt% or more and 97 wt% or less, and a blending rate of the polypropylene-based resin B is 3 wt% or more and 60 wt% or less (a total of the polypropylene-based resin A and the polypropylene-based resin B is 100 wt%),
   a melting point difference between the polypropylene-based resin A and the polypropylene-based resin B (a melting point of the polypropylene-based resin B - a melting point of the polypropylene-based resin A) is 10°C or more and 30°C or less,
   the polypropylene-based resin B is a recovered product of a post-consumer material,
   the polypropylene-based resin B has an ash content of 5 wt% or less with respect to 100 wt% of the polypropylene-based resin B, and
   in a melting peak observed in a DSC curve in heat-flux differential scanning calorimetry of the polypropylene-based resin B, a difference (Tme - Tms) between an extrapolated melting start temperature (Tms) and an extrapolated melting end temperature (Tme) of the melting peak is 30°C or more.

2. The method for producing polypropylene-based resin expanded beads according to claim 1, wherein in the mixture, the blending rate of the polypropylene-based resin A is more than 50 wt% and 90 wt% or less, and the blending rate of the polypropylene-based resin B is 10 wt% or more and less than 50 wt% (the total of the polypropylene-based resin A and the polypropylene-based resin B is 100 wt%).

3. The method for producing polypropylene-based resin expanded beads according to claim 1 or 2, wherein the difference (Tme - Tms) between the extrapolated melting start temperature (Tms) and the extrapolated melting end temperature (Tme) of the melting peak, that is 30°C or more and 100°C or less.

4. The method for producing polypropylene-based resin expanded beads according to any one of claims 1 to 3, wherein the melting point difference between the polypropylene-based resin A and the polypropylene-based resin B (the melting point of the polypropylene-based resin B - the melting point of the polypropylene-based resin A) is 10°C or more and 20°C or less.

5. The method for producing polypropylene-based resin expanded beads according to any one of claims 1 to 4, wherein the ash content of the polypropylene-based resin B is 0.5 wt% or less with respect to 100 wt% of the polypropylene-based resin B.

FIG. 1

FIG. 2

## INTERNATIONAL SEARCH REPORT

| International application No. |
| --- |
| **PCT/JP2023/030797** |

| **A.** | **CLASSIFICATION OF SUBJECT MATTER** |
| --- | --- |

*C08J 9/18*(2006.01)i; *B29C 44/00*(2006.01)i
FI:   C08J9/18 CES; B29C44/00

According to International Patent Classification (IPC) or to both national classification and IPC

| **B.** | **FIELDS SEARCHED** |
| --- | --- |

Minimum documentation searched (classification system followed by classification symbols)

C08J9/00-9/42; B29C44/00-44/60; B29C67/20; B29B17/00-17/04; C08J11/00-11/28; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** | |
| --- | --- | --- |
| Category* | Citation of document, with indication, where appropriate, of the relevant passages | Relevant to claim No. |
| A | JP 2007-283576 A (KANEKA CORP) 01 November 2007 (2007-11-01) claims, examples | 1-5 |
| A | JP 2005-297464 A (KANEKA CORP) 27 October 2005 (2005-10-27) claims, examples | 1-5 |
| A | JP 2007-203559 A (KANEKA CORP) 16 August 2007 (2007-08-16) claims, examples | 1-5 |
| P, A | WO 2023/053757 A1 (JSP CORP  ) 06 April 2023 (2023-04-06) claims, examples | 1-5 |
| P, A | WO 2023/067954 A1 (JSP CORP) 27 April 2023 (2023-04-27) claims, examples | 1-5 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 November 2023** | **21 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/030797**

| Patent document cited in search report | | | Publication date (day/month/year) | Patent family member(s) | | | Publication date (day/month/year) |
|---|---|---|---|---|---|---|---|
| JP | 2007-283576 | A | 01 November 2007 | (Family: none) | | | |
| JP | 2005-297464 | A | 27 October 2005 | (Family: none) | | | |
| JP | 2007-203559 | A | 16 August 2007 | (Family: none) | | | |
| WO | 2023/053757 | A1 | 06 April 2023 | JP | 2023-49877 | A | |
| | | | | claims, examples | | | |
| WO | 2023/067954 | A1 | 27 April 2023 | JP | 2023-62494 | A | |
| | | | | claims, examples | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007283576 A

**Non-patent literature cited in the description**

- II. 2.3 2.3.2 Qualitative Methods'' and 615 to 618 ''II. 2.3 2.3.4 Propylene/Ethylene Copolymer. Polymer Analysis Handbook. Kinokuniya Co., Ltd., January 1995, 608-609
- II. 2.3 2.3.2 Qualitative Methods. Polymer Analysis Handbook. Kinokuniya Co., Ltd., January 1995, 608-609
- II. 2.3 2.3.5 Propylene/Butene Copolymer. Polymer Analysis Handbook. Kinokuniya Co., Ltd., January 1995, 618-619
- II. 2.3 2.3.2 Qualitative Methods. Polymer Analysis Handbook. Kinokuniya Co., Ltd., January 1995
- II. 2.3 2.3.4 Propylene/Ethylene Copolymer. Polymer Analysis Handbook. Kinokuniya Co., Ltd., January 1995, 615-618